(19) Europäisches Patentamt
European Patent Office
Office européen des brevets

(11) Veröffentlichungsnummer : **0 098 803**
**B1**

(12) **EUROPÄISCHE PATENTSCHRIFT**

(45) Veröffentlichungstag der Patentschrift : **30.07.86**

(51) Int. Cl.⁴ : **C 08 F283/06**, D 06 P 1/607, D 06 M 13/38

(21) Anmeldenummer : **83810291.1**

(22) Anmeldetag : **30.06.83**

(54) **Wasserlösliche oder in Wasser dispergierbare Pfropfpolymerisate, deren Herstellung und Verwendung.**

(30) Priorität : **06.07.82 CH 4116/82**

(43) Veröffentlichungstag der Anmeldung : **18.01.84 Patentblatt 84/03**

(45) Bekanntmachung des Hinweises auf die Patenterteilung : **30.07.86 Patentblatt 86/31**

(84) Benannte Vertragsstaaten : **AT BE CH DE FR GB IT LI NL SE**

(56) Entgegenhaltungen :
EP-A- 0 011 833
CH-A- 6 946
DE-A- 1 203 475
DE-A- 2 025 696
GB-A- 1 351 255
US-A- 2 763 530
US-A- 4 025 484
US-A- 4 196 065

(73) Patentinhaber : **CIBA-GEIGY AG**
**Klybeckstrasse 141**
**CH-4002 Basel (CH)**

(72) Erfinder : **Schäfer, Paul, Dr.**
**Kornfeldstrasse 11**
**CH-4125 Riehen (CH)**
Erfinder : **Abel, Heinz**
**Egertenstrasse 5**
**CH-4153 Reinach (CH)**
Erfinder : **Guth, Christian**
**In den Klostermatten 26**
**CH-4052 Basel (CH)**
Erfinder : **Stehlin, Albert**
**Rue de Bouge 6**
**F-68300 Rosenau (FR)**

**EP 0 098 803 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Anmeldung betrifft neue wasserlösliche oder in Wasser dispergierbare Pfropfpolymerisate, Verfahren zu ihrer Herstellung und ihre mannigfache Verwendung z. B. als Foulardierhilfsmittel, Textilhilfsmittel, Netzmittel, Waschmittel, Antischaummittel oder Papierentlüfter.

In der De-B-1 203 475 ist ein Verfahren zur Herstellung eines mechanisch stabilen Latex durch Mischpolymerisation von 4-40 Gewichtsprozent Styrol, 55-95 Gewichtsprozent Alkylacrylat und 0,5-5 Gewichtsprozent Acrylsäure oder Methacrylsäure beschrieben, wobei die Polymerisation in wässriger Emulsion in Gegenwart anionischer oder nichtionischer Emulgatoren, eines oxydierenden Katalysators und eines Reduktionsmittels erfolgt. Sowohl das anionische als auch das nichtionogene Emulgator können einen hydrophoben Teil und eine Polyglykoletherkette als hydrophilen Bestandteil aufweisen.

Aus der EP-A-11 833 ist ein Verfahren zur Herstellung von Pfropfpolymerisaten aus Acrylsäure und Polyoxyalkylenverbindungen bekannt, bei dem 3 bis 15 Gewichtsprozent Acrylsäure auf eine Polyoxyalkylenverbindung der Formel

$$R''[(OC_nH_{2n})_zOR']_a$$

worin R' Wasserstoff oder Kohlenwasserstoffrest bedeutet, R" für einen von aliphatischer Ungesättigkeit freien Kohlenwasserstoffrest mit einer Wertigkeit von a steht und a 1 bis 4, n 2 bis 4 und z 8 bis 800 sind, aufgepfropft werden.

Ferner werden in der US-A-4 025 484 dispergierte Terpolymerisate beschrieben, welche durch Mischpolymerisation von Styrol, Maleinsäure oder deren Anhydrid und einem Vinylbenzylether von ethoxyliertem Nonylphenol hergestellt werden.

Die erfindungsgemässen Pfropfpolymerisate sind dadurch gekennzeichnet, dass sie mindestens 20 Gewichtsprozent, bezogen auf das Pfropfpolymerisat, eines hydrophilen, an ein Kohlenstoffatom gebundenen Pfropfbestandteiles und mindestens einen hydrophoben Rest aufweisen, welcher über eine Polyglykoletherkette von 2 bis 200 $-\overset{|}{\underset{|}{C}}-\overset{|}{\underset{|}{C}}-O$-Gruppen mit dem Pfropfbestandteil verbunden ist, wobei die Stammkette aus einem anionischen, kationischen, amphoteren oder vorzugsweise nichtionogenen Polyalkylenoxidaddukt, welches einen hydrophoben Rest besitzt, besteht und an einzelne Kohlenstoffatome der Polyglykoletherkette Seitenketten von Strukturelementen aufgepfropft enthält, die sich von ethylenisch ungesättigten polymerisierbaren Sulfonsäuren oder vorzugsweise Carbonsäuren bzw. deren Anhydriden ableiten.

Die zur Einführung der Seitenketten benötigten Monomeren können einzeln oder in Mischung untereinander verwendet werden.

Die neuen Pfropfpolymerisate sind vorzugsweise wasserlöslich. Sie können jedoch je nach Aufbau des Polymeren und Vorhandensein der hydrophilen Gruppen auch in dispergierter Form in wässerigen Medien vorliegen. Der hydrophile Pfropfbestandteil weist saure wasserlöslich machende Gruppen wie Carboxyl- und/oder Sulfonsäuregruppen auf.

Bei den anionischen Alkylenoxidaddukten handelt es sich vorzugsweise um saure Derivate von nichtionogenen oder kationischen Alkylenoxidaddukten, wie z. B. saure Ethergruppen oder vorzugsweise Estergruppen von anorganischen oder organischen Säuren enthaltende Anlagerungsprodukte von Alkylenoxiden, besonders Ethylenoxid und/oder Propylenoxid oder auch Styroloxid an aliphatische Kohlenwasserstoffreste mit insgesamt mindestens 4, vorzugsweise 12, Kohlenstoffatomen aufweisende organische Hydroxyl-, Carboxyl-, Amino- und/oder Amidoverbindungen bzw. Mischungen dieser Stoffe. Diese sauren Ether oder Ester können als freie Säuren oder als Salze, z. B. Alkalimetall-, Erdalkalimetall-, Ammonium- oder Aminsalze, vorliegen.

Die Herstellung dieser anionischen Tenside erfolgt nach bekannten Methoden, indem man z. B. an die genannten organischen Verbindungen mindestens 2 Mol, vorzugsweise mehr als 2 Mol, z. B. 10 bis 100 Mol, Ethylenoxid oder Propylenoxid oder alternierend in beliebiger Reihenfolge Ethylenoxid oder Propylenoxid anlagert und anschliessend die Anlagerungsprodukte verethert bzw. verestert und gegebenenfalls die Ether bzw. die Ester in ihre Salze überführt. Als Grundstoffe kommen höhere Fettalkohole, d. h. Alkanole oder Alkenole mit je 8 bis 22 Kohlenstoffatomen, zwei- bis sechswertige aliphatische Alkohole von 2 bis 9 Kohlenstoffatomen, alicyclische Alkohole, Phenylphenole, Benzylphenole, Alkylphenole mit einem oder mehreren Alkylsubstituenten, der, bzw. die zusammen mindestens 4 Kohlenstoffatome aufweisen, Fettsäuren mit 8 bis 22 Kohlenstoffatomen, Amine, die aliphatische und/oder cycloaliphatische Kohlenwasserstoffreste von mindestens 8 Kohlenstoffatomen aufweisen, besonders derartige Reste aufweisende Fettamine, Hydroxyalkylamine, Hydroxyalkylamide und Aminoalkylester von Fettsäuren oder Dicarbonsäuren und höher alkylierter Aryloxycarbonsäuren in Betracht.

Gut geeignete anionische Polyalkylenoxidaddukte sind saure Ester oder deren Salze eines Polyadduktes von 2 bis 100 Mol, vorzugsweise bis 50 Mol, Ethylenoxid an 1 Mol Fettalkohol mit 8 bis 22 Kohlenstoffatomen oder an 1 Mol eines Phenols, das mindestens eine Benzylgruppe, eine Phenylgruppe oder vorzugsweise eine Alkylgruppe mit mindestens 4 Kohlenstoffatomen aufweist, wie z. B. Benzylphenol, Dibenzylphenol, Dibenzyl-(nonyl)-phenol, o-Phenylphenol, Butylphenol, Tributylphenol, Octylphenol, Nonylphenol, Dodecylphenol oder Pentadecylphenol, wobei diese sauren Ester einzeln oder als Gemisch verwendet werden können.

Bevorzugte anionische Polyalkylenoxidaddukte entsprechen der Formel

$$Y—O—(CH_2CH_2O)_m—X \qquad (1)$$

worin Y Alkyl oder Alkenyl je mit 8 bis 22 Kohlenstoffatomen, Alkylphenyl mit 4 bis 16 Kohlenstoffatomen im Alkylteil oder o-Phenylphenyl, X den Säurerest einer anorganischen, Sauerstoff enthaltenden Säure, wie z. B. Schwefelsäure oder vorzugsweise Phosphorsäure oder auch den Rest einer organischen Säure und m 2 bis 40, vorzugsweise 2 bis 15 bedeuten. Der Alkylrest im Alkylphenyl befindet sich vorzugsweise in para-Stellung. Die Alkylreste im Alkylphenyl können Butyl, Hexyl, n-Octyl, n-Nonyl, p-tert.Octyl, p-iso-Nonyl, Decyl oder Dodecyl sein. Bevorzugt sind die Alkylreste mit 8 bis 12 Kohlenstoffatomen, insbesondere die Octyl- oder Nonylreste.

Die Fettalkohole zur Herstellung der anionischen Tenside der Formel (1) sind z. B. solche mit 8 bis 22, insbesondere 8 bis 18 Kohlenstoffatomen, wie Octyl-, Decyl-, Lauryl-, Tridecyl-, Myristyl-, Cetyl-, Stearyl-, Oleyl-, Arachidyl- oder Behenylalkohol.

Der Säurerest X leitet sich beispielsweise von niedermolekularen Dicarbonsäuren ab, wie z. B. von Maleinsäure, Bernsteinsäure oder Sulfobernsteinsäure, und ist über eine Esterbrücke mit dem Ethylenoxyteil des Moleküls verbunden. Insbesondere leitet sich X jedoch von anorganischen mehrbasischen Säuren, wie Schwefelsäure oder insbesondere Orthophosphorsäure ab.

Der Säurerest X kann als freie Säure oder in Salzform, d. h. z. B. als Alkalimetall-, Ammonium- oder Aminsalz, vorliegen. Beispiele für solche Salze sind Lithium-, Natrium-, Kalium-, Ammonium-, Trimethylamin-, Ethanolamin-, Diethanolamin- oder Triethanolaminsalze.

Besonders bevorzugt sind anionische Tenside der Formel

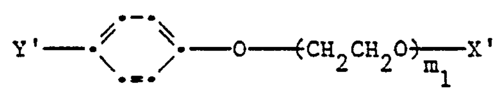
(2)

worin Y' Octyl oder Nonyl bedeutet, $m_1$ 2 bis 15 ist und X' ein Säurerest ist, der sich von Schwefelsäure oder vorzugsweise von o-Phosphorsäure ableitet, und die Tenside als freie Säuren, Natrium- oder Ammoniumsalze vorliegen. Von besonderem Interesse ist der saure Phosphorsäureester des Anlagerungsproduktes von 5 bis 12 Mol Ethylenoxid an 1 Mol p-Nonylphenol.

Die anionischen Alkylenoxidaddukte können zur Herstellung der Pfropfpolymerisate einzeln oder als Mischungen untereinander eingesetzt werden.

Als kationische Polyalkylenoxidaddukte kommen insbesondere Monoamine oder Polyamine mit 2 oder mehr basischen Stickstoffatomen, vorzugsweise 2 bis 5, welche Amine mindestens eine definitionsgemässe Polyglykoletherkette und mindestens einen lipophilen (hydrophoben) Substituenten z. B. Alkenyl oder Alkyl je mit 8 bis 22 Kohlenstoffatomen aufweisen und teilweise oder vollständig quaterniert sein können, in Betracht.

Diese kationischen Alkylenoxidaddukte sind ebenfalls an sich bekannt und können auf an sich bekannte Weise hergestellt werden z. B. durch Umsetzung entsprechender aliphatischer Amine, deren Alkyl- oder Alkenylrest vorzugsweise 10 bis 22 Kohlenstoffatome aufweist, wie z. B. Dodecylamin, Hexadecylamin, Heptadecylamin, Stearylamin, Talgfettamin, Arachidylamin, Behenylamin oder Oleylamin oder Di-, Tri- oder Tetraamine, wie Dodecylpropylendiamin, Octadecylethylendiamin oder Octadecyldiethylentriamin mit höchstens 120 Mol eines Alkylenoxides z. B. Propylenoxid, vor allem aber Ethylenoxid oder ein Gemisch aus Propylenoxid und Ethylenoxid oder z. B. 1 bis 2 Mol Styroloxid und höchstens 35 Mol der genannten Alkylenoxide und gewünschtenfalls durch anschliessende Umsetzung mit üblichen Quaternisierungsmitteln, wie z. B. Methyl-, Ethyl- oder Benzylhalogeniden, Diethylsulfat und vor allem Dimethylsulfat, Halogenhydrinen oder Halogencarbonsäureamiden, wie z. B. Chloracetamid.

Bevorzugt werden oxialkylierte Fettamine der Formel

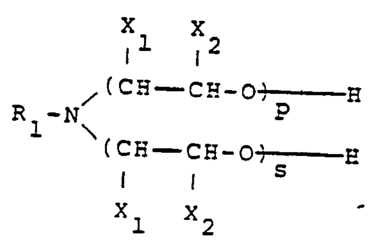
(3)

oder quaternäre Ammoniumverbindungen der Formel

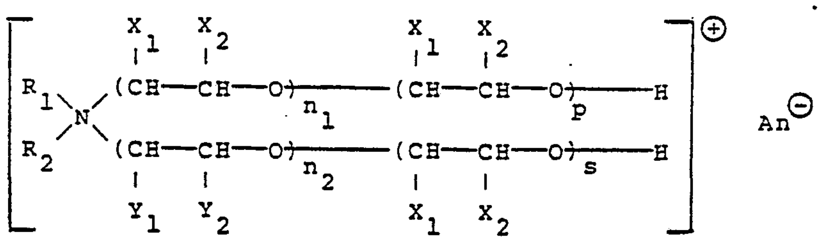

(4)

worin

$R_1$ Alkyl oder Alkenyl jeweils mit 10 bis 22 Kohlenstoffatomen,

$R_2$ Alkyl mit 1 bis 4 Kohlenstoffatomen, Hydroxyalkyl mit 2 bis 4 Kohlenstoffatomen, Carbamoylemethyl oder Benzyl, vorzugsweise Methyl,

von $Y_1$ und $Y_2$ eines Wasserstoff und das andere Phenyl,

von $X_1$ und $X_2$ eines Wasserstoff oder Methyl und das andere Wassersstoff,

$An^{\ominus}$ das Anion einer anorganischen oder organischen Säure, insbesondere einer starken Mineralsäure oder einer organischen Sulfonsäure, wie z. B. das Chlorid-, Bromid-, Sulfat-, Benzolsulfonat-, p-Toluolsulfonat-, Methansulfonat- oder Aethansulfonation,

$n_1$ und $n_2$ 0 oder 1 und

p und s ganze Zahlen bedeuten, wobei die Summe von p + s 3 bis 25 beträgt.

In den Formeln (3) und (4) bedeutet $R_1$ vorzugsweise Alkyl oder Alkenyl mit 12 bis 18 Kohlenstoffatomen, besonders Octadecyl oder Octadecenyl, $X_1$ und $X_2$ sind vorzugsweise Wasserstoff. Die Summe von p + s ist vorzugsweise 5 bis 20. Von $n_1$ und $n_2$ ist eines vorzugsweise 1 und das andere 0.

Als amphotere Alkylenoxidaddukte kommen z. B. Monoamine oder Polyamine mit 2 oder mehr basischen Stickstoffatomen, vorzugsweise 2 bis 5, welche Amine mindestens eine pro basisches Stickstoffatom entsprechende saure, veretherte oder veresterte Polyglykoletherkette und mindestens einen hydrophoben Rest aufweisen und zudem gegebenenfalls teilweise oder vollständig quaterniert sein können.

Unter den amphoteren Tensiden sind die Monoschwefelsäureester von Anlagerungsprodukten von 3 bis 15 Mol Ethylenoxid an 1 Mol Fettamin mit vorzugsweise 12 bis 22 Kohlenstoffatomen oder Fettamingemischen, wie z. B. Talgfettamin besonders bevorzugt.

Bevorzugte erfindungsgemässe Pfropfpolymerisate besitzen ein Stammkette bestehend aus mindestens einem einen hydrophoben Rest aufweisenden nichtionogenen Alkylenoxidaddukt, dessen zweite endständige Hydroxylgruppe acyliert z. B. acetyliert oder insbesondere unsubstituiert ist. Bei diesen nichtionogenen Tensiden handelt es sich zweckmässig um Alkylenoxidanlagerungsprodukte von 2 bis 200 Mol Alkylenoxid, z. B. Ethylenoxid und/oder Propylenoxid, an 1 Mol eines aliphatischen Monoalkohols mit mindestens 8 Kohlenstoffatomen, eines 3- bis 6-wertigen aliphatischen Alkohols, eines gegebenenfalls durch Alkyl, Benzyl oder Phenyl substituierten Phenols oder einer Fettsäure mit 8 bis 22 Kohlenstoffatomen.

Aliphatische Monoalkohole zur Herstellung der nichtionogenen Tenside sind z. B. wasserunlösliche Monoalkohole mit mindestens 8 Kohlenstoffatomen, vorzugsweise 12 bis 22 Kohlenstoffatomen. Diese Alkohole können gesättigt oder ungesättigt und verzweigt oder geradkettig sein und können allein oder im Gemisch eingesetzt werden. Es können natürliche Alkohole, wie z. B. Myristylalkohol, Cetylalkohol, Stearylalkohol oder Oleylalkohol oder synthetische Alkohole, z. B. Oxo-Alkohole wie insbesondere 2-Ethylhexanol, ferner Trimethylhexanol, Trimethylnonylalkohol, Hexadecylalkohol oder Alfole mit dem Alkylenoxid umgesetzt werden.

Weitere aliphatische Alkohole, die mit Alkylenoxid umgesetzt werden können, sind insbesondere Glycerin, Trimethylolethan, Trimethylolpropan, Erythrit, Pentaerythrit, Mannit und Sorbit. Die 3- bis 6-wertigen Alkohole werden vorzugsweise mit Propylenoxid oder Ethylenoxid oder Gemischen dieser Alkylenoxide umgesetzt.

Als gegebenenfalls substituierte Phenole eignen sich beispielsweise Phenol, Benzylphenol, o-Phenylphenol oder Alkylphenole, deren Alkylrest insgesamt 4 bis 16, vorzugsweise 4 bis 12 Kohlenstoffatome aufweist. Beispiele dieser Alkylphenole sind Butylphenol, Tributylphenol, Octylphenol, und insbesondere Nonylphenol.

Die Fettsäuren weisen vorzugsweise 8 bis 12 Kohlenstoffatome auf und können gesättigt oder ungesättigt sein, wie z. B. die Caprin-, Laurin-, Myristin-, Palmitin- oder Stearinsäure bzw. die Decen-, Dodecen-, Tetradecen-, Hexadecen-, Oel-, Linol-, Linolen- oder vorzugsweise Rizinolsäure.

Als nichtionogene Tenside seien beispielsweise genannt :

— Anlagerungsprodukte von vorzugsweise 2 bis 40 Mol Alkylenoxiden, insbesondere Ethylenoxid, wobei einzelne Ethylenoxideinheiten durch substituierte Epoxide, wie Styroloxid und/oder Propylenoxid, ersetzt sein können, an höhere ungesättigte oder gesättigte Fettalkohole, Fettsäuren oder Fettamide mit 12 bis 22 Kohlenstoffatomen oder an Phenylphenol oder Alkylphenole, deren Alkylreste mindestens 4 Kohlenstoffatome, vorzugsweise 4 bis 12 Kohlenstoffatome aufweisen ;

— Alkylenoxid-Anlagerungsprodukte von Umsetzungsprodukten aus einer 8 bis 22 Kohlenstoffatome aufweisenden Fettsäure und einem primären oder sekundären, mindestens eine Hydroxyniederalkylgruppe aufweisenden Amin, wobei die Umsetzung so erfolgt, dass das molekulare Mengenverhältnis zwischen Hydroxyalkylamin und Fettsäure 1 : 1 und grösser als 1, z. B. 1,1 : 1 bis 2 : 1 sein kann, und

— Anlagerungsprodukte von Propylenoxid an einen drei- bis sechswertigen aliphatischen Alkohol von 3 bis 6 Kohlenstoffatomen, z. B. Glycerin oder Pentaerythrit, wobei die Polypropylenoxydaddukte in durchschnittliches Molekulargewicht von 250 bis 1 800, vorzugsweise 400 bis 900, aufweisen.

Gut geeignete nichtionogene Tenside sind Anlagerungsprodukte von 2 bis 40 Mol Ethylenoxid an 1 Mol Fettalkohol oder Fettsäure mit jeweils 12 bis 22 Kohlenstoffatomen oder an 1 Mol Alkylphenol mit insgesamt 4 bis 12 Kohlenstoffatomen im Alkylteil.

Als ethylenisch ungesättigte polymerisierbare Carbonsäuren oder Sulfonsäuren, die zur Einführung der aufgepfropften Monomeren (Seitenketten) in die als Stammkette genannten Polyalkylenoxidaddukte dienen, können sowohl Monocarbonsäuren als auch Dicarbonsäuren und deren Anhydride sowie auch Sulfonsäuren, die jeweils einen ethylenisch ungesättigten aliphatischen Rest und vorzugsweise höchstens 7 Kohlenstoffatome aufweisen, in Betracht kommen. Bei den Monocarbonsäuren handelt es sich z. B. um die Acrylsäure, Methacrylsäure, α-Halogenacrylsäure, 2-Hydroxyethylacrylsäure, α-Cyanoacrylsäure, Crotonsäure und Vinylessigsäure. Ethylenisch ungesättigte Dicarbonsäuren sind vorzugsweise die Fumarsäure, Maleinsäure oder Itaconsäure, ferner die Mesaconsäure, Citraconsäure, Glutaconsäure und Methylenmalonsäure. Als Anhydrid dieser Säuren sei insbesondere Maleinsäureanhydrid genannt.

Als definitionsgemässe Sulfonsäuren kommen beispielsweise Vinylsulfonsäure oder 2-Acrylamido-2-methylpropansulfonsäure in Frage. Vorzugsweise handelt es sich um Monocarbonsäuren mit 3 bis 5 Kohlenstoffatomen, insbesondere um die Methacrylsäure und vor allem um die Acrylsäure.

Erfindungsgemässe Pfropfpolymerisate von besonderem Interesse enthalten als Stammkette Reste eines Anlagerungsproduktes von 2 bis 40 Mol Ethylenoxid an 1 Mol Fettalkohol mit 12 bis 22 Kohlenstoffatomen oder an 1 Mol Alkylphenol mit insgesamt 4 bis 12 Kohlenstoffatomen im Alkylteil oder von 3 bis 40 Mol, vorzugsweise 5 bis 25 Mol Ethylenoxid an 1 Mol Fettamin mit 10 bis 22 Kohlenstoffatomen und als Seitenketten mindestens 30 Gew.-%, vorzugsweise mindestens 50 Gew.-% und insbesondere 50 bis 95 Gew.-%, bezogen auf das Pfropfpolymerisat, aufgepfropfte Acrylsäure.

Unter diesen Produkten werden solche, die als Stammkette den Rest des Anlagerungsproduktes von 2 bis 35 Mol Ethylenoxid an 1 Mol Octylphenol oder insbesondere Nonylphenol enthalten, bevorzugt. Diese Anlagerungsprodukte können gewünschtenfalls auch acetyliert sein.

Die Herstellung der erfindungsgemässen Pfropfpolymerisate erfolgt nach an sich bekannten Methoden, zweckmässig in der Weise, dass man (1) ein anionisches, kationisches, amphoteres oder nichtionogenes Polyalkylenoxidaddukt, welches einen hydrophoben Rest und eine Polyglykoletherkette von 2 bis 200 $-\overset{|}{\underset{|}{C}}-\overset{|}{\underset{|}{C}}-O$-Gruppen aufweist, mit (2) mindestens 20 Gew.-% bezogen auf das Pfropfpolymerisat, eines ethylenischungesättigten polymerisierbaren Monomeren, welches hydrophile Gruppen enthält, wie z. B. entsprechende Carbonsäuren, deren Anhydride oder Sulfonsäuren, zusammenbringt und in Gegenwart von Katalysatoren, zweckmässig bei einer Temperatur von 60 bis 100 °C polymerisiert.

Als Katalysatoren werden vorzugsweise freie Radikale bildende organische oder anorganische Initiatoren verwendet. Geeignete organische Initiatoren zur Durchführung der radikalischen Polymerisation sind z. B. symmetrische aliphatische Azoverbindungen wie Azo-bis-isobuttersäurenitril, Azo-bis-2-methyl-valeronitril, 1,1'-Azo-bis-1-cyclo-hexannitril und 2,2'-Azo-bis-isobuttersäurealkylester ; symmetrische Diacylperoxide, wie z. B. Acetyl-, Propionyl- oder Butyrylperoxid, Benzoylperoxid, Brom-, Nitro-, Methyl- oder Methoxygruppen substituierte Benzoylperoxide sowie Lauroylperoxid ; symmetrische Peroxydicarbonate, wie z. B. Diethyl-, Diisopropyl-, Dicyclohexyl-, sowie Dibenzylperoxidicarbonat ; tert.-Butylperoctoat, tert.-Butylperbenzoat oder tert.-Butylphenylperacetat sowie Peroxidcarbamate wie tert.-Butyl-N-(phenylperoxi)-carbamat oder tert.-Butyl-N-(2,3-dichlor- oder -4-chlorphenyl-peroxi)-carbamat. Weitere geeignete organische Peroxide sind : tert.-Butylhydroperoxid, Di-tert.-butylperoxid, Cumolhydroperoxid, Di-cumolperoxid und tert.-Butylperpivalat.

Geeignete anorganische Initiatoren sind Wasserstoffsuperoxid, Persulfate oder Peroxidisulfate.

Bevorzugter Initiator (Aktivator) ist Dibenzoylperoxid sowie auch Kaliumperoxidisulfat.

Diese Katalysatoren werden in der Regel in Mengen von 0,1 bis 10 Gewichtsprozent, vorzugsweise 0,5 bis 2 Gewichtsprozent, bezogen auf die Ausgangsprodukte eingesetzt.

Die Pfropfpolymerisation wird vorteilhafterweise in inerter Atmosphäre z. B. in Gegenwart von Stickstoff durchgeführt.

Die Pfropfpolymerisate fallen als Lösungen oder Emulsionen mit einem Trockengehalt von in der Regel 20 bis 30 Gewichtsprozent an und ergeben nach dem Trocknen je nach Zusammensetzung weiche, wachsartige oder spröde klare Filme.

Erfindungsgemässe Pfropfpolymerisate können 5 bis 80 Gewichtsprozent der als Stammkette verwendeten anionischen, kationischen, amphoteren oder nichtionogenen Polyalkylenoxidaddukte und 95 bis 20 Gewichtsprozent der aufgepfropften Seitenketten enthalten. Das erfindungsgemäss verwendete Polyalkylenoxidaddukt weist in der Regel eine Polyglykoletherkette vom durchschnittlichen Molekulargewicht 80 bis 8 800, vorzugsweise 80 bis 4 400 und insbesondere 80 bis 1 500 auf.

Bevorzugte Pfropfpolymerisate enthalten 5 bis 50 Gewichtsprozent von Resten der als Stammkette

verwendeten Polyalkylenoxidaddukte und 50 bis 95 Gewichtsprozent der als Seitenketten aufgepfropften Monomeren.

Die als Ausgangsmaterialien zur Herstellung der neuen Pfropfpolymerisate verwendeten Polyalkenyoxidaddukte können anionisch, amphoter, kationisch oder nichtionogen sein und die aufgepfropften Monomeren können z. B. Carbonsäure- und/oder Sulfonsäuregruppen aufweisen. Entsprechend dieser Vielzahl von Verschiedenheit der Ausgangsmaterialien zu ihrer Herstellung besitzen die neuen Pfropfpolymerisate auch verschiedene Eigenschaften und können daher für die verschiedensten Anwendungszwecke in Betracht kommen.

Beispielsweise können sie in Antischaummitteln für die Textilindustrie, für industrielle Prozesse, z. B. Gaswäsche, und für die Fermentation verwendet werden. Sie können ebenfalls in flüssigen oder pulverförmigen Haushaltwaschmittel oder Waschmitteln für Gewebe und Teppiche Verwendung finden. Sie können somit als z. B. Builder allein oder in Kombination mit weiteren Gerüstsubstanzen, wie z. B. Phosphaten, insbesondere wasserlöslichen Alkalimetallphosphaten (Poly- oder Pyrophosphaten) und/oder Silikaten sowie auch in Kombination mit Seifen z. B. Kaliumseifen, Aminoxiden, Bleichmitteln (Persalzen, Peroxiden oder Hydraten), und/oder optischen Aufhellern eingesetzt werden. Eine andere Möglichkeit besteht darin, dass den Waschflotten die erfindungsgemässen Pfropfpolymerisate in Kombination mit üblichen Tensiden, Dispergiermitteln, eiweisshaltigen Stoffen oder vorteilhafterweise mit Homopolymerisaten der Acrylsäure oder Maleinsäure, z. B. Polymaleinsäureanhydrid sowie mit Copolymerisaten der Acrylsäure mit Methacrylsäure, Methacrylnitril, Acrylsäureestern, Methacrylsäureestern oder Vinylmonomeren, Copolymerisaten aus Maleinsäure und Styrol, Maleinsäure und einem Vinylester oder Maleinsäure und einem Vinylether oder insbesondere in Kombination mit Carboxymethylcellulose gegeben werden.

Weitere Komplexbildner, mit denen die Pfropfpolymerisate kombiniert werden können, sind Hydroxylgruppen enthaltende Polycarbonsäuren wie die Zitronensäure oder Gluconsäure, sowie basische Stickstoffverbindungen, welche mindestens zwei stickstoffgebundene, gegebenenfalls weitersubstituierte Phosphonatmethyl- oder Carboxymethylgruppen enthalten. Es handelt sich bei diesen Stickstoffverbindungen um Aminoalkylenessigsäuren, Aminocycloalkylenessigsäuren sowie um Aminoalkylenphosphonsäuren, N-Sulfoalkanaminophosphonsäuren, wie z. B. um Nitrilotriessigsäure, Ethylendiaminotetraessigsäure, β-Hydroxyethyl-ethylendiaminotriessigsäure, Cyclohexylendiaminotetraessigsäure, Diethylentriaminopentaessigsäure bzw. Nitrilo-tris-(methylenphosphonsäure), 1-Aminoethan-1, 1-diphosphonsäure, N-Sulfoethan-1-amino-ethan-1, 1-diphosphonsäure, 1-Hydroxy-3-amino-propan-1, 1-diphosphonsäure, Ethylendiamino-tetra(methylenphosphonsäure), Diethylen-triamino-penta(methylenphosphonsäure), Hexamethylendiamino-tetra(methylenphosphonsäure) sowie um die wasserlöslichen Salze z. B. Natriumsalze oder Magnesiumsalze dieser Säuren.

Desweiteren dienen die erfindungsgemäss erhaltenen Lösungen oder Emulsionen der neuen Pfropfpolymerisate zur Soil-Release und Antistatisch-Ausrüstung sowie zur Verringerung der Schmutzablagerung beim Waschen und zum Hydrophilieren von Textilien, die vorzugsweise mindestens teilweise aus synthetischen Fasern z. B. Polyester, Polyamid, Polyacrylnitril oder Polypropylen bestehen.

Ebenso können die neuen Pfropfpolymerisate in alkalischen Netzmitteln vorzugsweise in Kombination mit Peroxiden oder Persulfaten eingesetzt werden.

Ferner können sie für die Schlammentwässerung sowie als Farbstofflösemittel oder Antigeliermittel verwendet werden. Papierentlüfter und Träger von Wirksubstanzen für Agrarchemikalien stellen weitere Möglichkeiten dar, die neuen Substanzen einzusetzen.

In den nachfolgenden Beispielen sind die Teile Gewichtsteile und die Prozente Gewichtsprozente. « ppm » bedeutet « Teile pro Million ».

Die folgenden Produkte sind Beispiele für die als Stammkette oder Komponente (1) verwendeten anionischen, kationischen, amphoteren oder nichtionogenen Polyalkylenoxidaddukte.

A. Anionische Polyalkylenoxidaddukte

$A_1$ Ammoniumsalz des sauren Schwefelsäureesters des Anlagerungsproduktes von 2 Mol Ethylenoxid an 1 Mol Alfol (1014);

$A_2$ Ammoniumsalz des sauren Schwefelsäureesters des Anlagerungsproduktes von 2 Mol Ethylenoxid an 1 Mol Stearylalkohol;

$A_3$ Ammoniumsalz des sauren Schwefelsäureesters des Anlagerungsproduktes von 3 Mol Ethylenoxid an 1 Mol 2-Ethyl-hexanol;

$A_4$ Ammoniumsalz des sauren Schwefelsäureesters des Anlagerungsproduktes von 15 Mol Ethylenoxid an 1 Mol Stearylalkohol;

$A_5$ Ammoniumsalz des sauren Schwefelsäureesters des Anlagerungsproduktes von 3 Mol Ethylenoxid an 1 Mol Tridecylalkohol;

$A_6$ Ammoniumsalz des sauren Schwefelsäureesters des Anlagerungsproduktes von 4 Mol Ethylenoxid an 1 Mol Hydroabietylalkohol;

$A_7$ Ammoniumsalz des sauren Schwefelsäureesters des Anlagerungsproduktes von 3 Mol Ethylenoxid an 1 Mol Alfol (2022);

$A_8$ Ammoniumsalz des sauren Schwefelsäureesters des Anlagerungsproduktes von 3 Mol Ethylenoxid an 1 Mol Laurylalkohol;

$A_9$ Di-(β-hydroxy-ethyl)-aminsalz des sauren Schwefelsäureesters des Anlagerungsproduktes von 3 Mol Ethylenoxid an 1 Mol Laurylalkohol ;

$A_{10}$ Natriumsalz des sauren Schwefelsäureesters des Anlagerungsproduktes von 2 Mol Ethylenoxid an 1 Mol Laurylalkohol ;

$A_{11}$ Natriumsalz des sauren Schwefelsäureesters des Anlagerungsproduktes von 3 Mol Ethylenoxid an 1 Mol Laurylalkohol ;

$A_{12}$ Saurer Phosphorsäureester des Anlagerungsproduktes von 5 Mol Ethylenoxid an 1 Mol 2-Ethyl-n-hexanol ;

$A_{13}$ Ammoniumsalz des sauren Schwefelsäureesters des Anlagerungsproduktes von 3 Mol Ethylenoxid an 1 Mol Butylphenol ;

$A_{14}$ Ammoniumsalz des sauren Schwefelsäureesters des Anlagerungsproduktes von 5 Mol Ethylenoxid an 1 Mol Tributylphenol ;

$A_{15}$ Ammoniumsalz des sauren Schwefelsäureesters des Anlagerungsproduktes von 2 Mol Ethylenoxid an 1 Mol Nonylphenol ;

$A_{16}$ Ammoniumsalz des sauren Schwefelsäureesters des Anlagerungsproduktes von 10 Mol Propylenoxid und 10 Mol Ethylenoxid an 1 Mol Nonylphenol ;

$A_{17}$ Ammoniumsalz des sauren Schwefelsäureesters des Anlagerungsproduktes von 35 Mol Ethylenoxid an 1 Mol Nonylphenol ;

$A_{18}$ Ammoniumsalz des sauren Schwefelsäureesters des Anlagerungsproduktes von 50 Mol Ethylenoxid an 1 Mol Nonylphenol ;

$A_{19}$ Ammoniumsalz des sauren Schwefelsäureesters des Anlagerungsproduktes von 15 Mol Propylenoxid an 1 Mol Nonylphenol ;

$A_{20}$ Ammoniumsalz des sauren Schwefelsäureesters des Anlagerungsproduktes von 6 Mol Ethylenoxid an 1 Mol Dodecylphenol ;

$A_{21}$ Ammoniumsalz des sauren Schwefelsäureesters des Anlagerungsproduktes von 6 Mol Ethylenoxid an 1 Mol Pentadecylphenol ;

$A_{22}$ Ammoniumsalz des sauren Schwefelsäureesters des Anlagerungsproduktes von 8 Mol Ethylenoxid an 1 Mol o-Phenylphenol ;

$A_{23}$ Natriumsalz des sauren Maleinsäureesters des Anlagerungsproduktes von 2 Mol Ethylenoxid an 1 Mol p-Nonylphenol ;

$A_{24}$ Natriumsalz des sauren Monosulfobernsteinsäureesters des Anlagerungsproduktes von 2 Mol Ethylenoxid an 1 Mol p-Nonylphenol ;

$A_{25}$ Ammoniumsalz des sauren Phosphorsäureesters des Anlagerungsproduktes von 2 Mol Ethylenoxid an 1 Mol Nonylphenol ;

$A_{26}$ Natriumsalz des sauren Schwefelsäureesters des Anlagerungsproduktes von 12 Mol Ethylenoxid an 1 Mol Dibenzylphenol ;

$A_{27}$ Natriumsalz des sauren Schwefelsäureesters des Anlagerungsproduktes von 15 Mol Ethylenoxid an 1 Mol Dibenzyl-(nonyl)-phenol ;

$A_{28}$ saurer Phosphorsäureester des Anlagerungsproduktes von 10 Mol Ethylenoxid an 1 Mol p-Nonylphenol ;

$A_{29}$ Ammoniumsalz des sauren Schwefelsäureesters des Anlagerungsproduktes von 15 Mol Ethylenoxid an 1 Mol Stearinsäure-β-hydroxyethylamid ;

$A_{30}$ Ammoniumsalz des sauren Dischwefelsäureesters des Anlagerungsproduktes von 3 Mol Ethylenoxid an 1 Mol Talgfettamin ;

$A_{31}$ Ammoniumsalz des sauren Dischwefelsäureesters des Anlagerungsproduktes von 8 Mol Ethylenoxid an 1 Mol Talgfettamin ;

$A_{32}$ Ammoniumsalz des sauren Dischwefelsäureesters des Anlagerungsproduktes von 3 Mol Propylenoxid und 5 Mol Ethylenoxid an 1 Mol Talgfettamin ;

$A_{33}$ Ammoniumsalz des sauren Diphosphorsäureesters des Anlagerungsproduktes von 8 Mol Ethylenoxid an 1 Mol Talgfettamin ;

$A_{34}$ Ammoniumsalz des sauren Dischwefelsäureesters des Anlagerungsproduktes von 1 Mol Styroloxid und 8 Mol Ethylenoxid an 1 Mol Dodecylamin ;

$A_{35}$ Natriumsalz des sauren Sulfobernsteinsäurehalbesters des Anlagerungsproduktes von 8 Mol Ethylenoxid an 1 Mol Talgfettamin ;

$A_{36}$ Ammoniumsalz des sauren Dischwefelsäureesters des Anlagerungsproduktes von 4 Mol Ethylenoxid an 1 Mol Stearylamin ;

$A_{37}$ Mischung aus dem Mono- und Di-Phosphorsäureester (1 : 2) des Anlagerungsproduktes von 8 Mol Aethylenoxid an 1 Mol Dodecylamin ;

$A_{38}$ Mischung aus dem Mono- und Di-Phosphorsäureesters (1 : 2) des Anlagerungsproduktes von 4 Mol Aethylenoxid an 1 Mol Laurylamin ;

B. Kationische Polyalkylenoxidaddukte

$B_1$ Anlagerungsprodukt von 4 Mol Ethylenoxid an 1 Mol Talgfettamin ;

$B_2$ Anlagerungsprodukt von 8 Mol Ethylenoxid an 1 Mol Talgfettamin ;

$B_3$ Anlagerungsprodukt von 3 Mol Propylenoxid und 5 Mol Ethylenoxid an 1 Mol Talgfettamin ;

$B_4$ Anlagerungsprodukt von 1 Mol Styroloxid und 8 Mol Ethylenoxid an 1 Mol Dodecylamin ;

$B_5$ Mit Chloracetamid quaterniertes Anlagerungsprodukt von 8 Mol Ethylenoxid an 1 Mol Talgfettamin ;

$B_6$ Mit Dimethylsulfat quaterniertes Anlagerungsprodukt von 30 Mol Ethylenoxid an 1 Mol eines $C_{18}$-$C_{22}$-Fettamins ;

$B_7$ Mit Dimethylsulfat quaterniertes Anlagerungsprodukt von 30 Mol Ethylenoxid an 1 Mol Laurylamin ;

$B_8$ Mit Dimethylsulfat quaterniertes Anlagerungsprodukt von 15 Mol Ethylenoxid an 1 Mol Laurylamin ;

$B_9$ Mit Dimethylsulfat quaterniertes Anlagerungsprodukt von 15 Mol Ethylenoxid an 1 Mol Stearylamin ;

$B_{10}$ Mit Dimethylsulfat quaterniertes Anlagerungsprodukt von 1 Mol Styroloxid und 30 Mol Ethylenoxid an 1 Mol Stearylamin ;

$B_{11}$ Mit Dimethylsulfat quaterniertes Anlagerungsprodukt von 6 Mol Propylenoxid und 30 Mol Ethylenoxid ;

$B_{12}$ Mit Dimethylsulfat quaterniertes Anlagerungsprodukt von 1 Mol Styroloxid und 20 Mol Ethylenoxid an 1 Mol Stearylamin ;

$B_{13}$ Anlagerungsprodukt der Formel

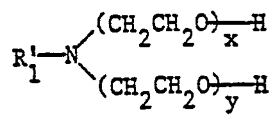

$x + y = 7$

$R_1' = 30\ \%\ C_{16}H_{33}$
$30\ \%\ C_{18}H_{37}$
$40\ \%\ C_{18}H_{35}$

C. Amphotere Polyalkylenoxidaddukte

$C_1$ Ammoniumsalz des sauren Monoschwefelsäureesters des Anlagerungsproduktes von 3 Mol Ethylenoxid an 1 Mol Talgfettamin ;

$C_2$ Ammoniumsalz des sauren Monoschwefelsäureesters des Anlagerungsproduktes von 4 Mol Ethylenoxid an 1 Mol Talgfettamin ;

$C_3$ Ammoniumsalz des sauren Monoschwefelsäureesters des Anlagerungsproduktes von 6 Mol Ethylenoxid an 1 Mol Talgfettamin ;

$C_4$ Ammoniumsalz des sauren Monoschwefelsäureesters des Anlagerungsproduktes von 8 Mol Ethylenoxid an 1 Mol Talgfettamin ;

$C_5$ Mit Chloracetamid quaterniertes Ammoniumsalz des amphoteren Schwefelsäureesters des Anlagerungsproduktes von 8 Mol Ethylenoxid an 1 Mol Talgfettamin ;

$C_6$ Mit Dimethylsulfat quaterniertes Ammoniumsalz des amphoteren Schwefelsäureesters des Anlagerungsproduktes von 30 Mol Ethylenoxid an 1 Mol eines $C_{18}$-$C_{22}$ Fettamins ;

D. Nichtionogene Polyalkylenoxidaddukte

$D_1$ Anlagerungsprodukt von 6 Mol Ethylenoxid an 1 Mol 2-Ethylhexanol ;
$D_2$ Anlagerungsprodukt von 5 Mol Ethylenoxid an 1 Mol 2-Ethylhexanol ;
$D_3$ Anlagerungsprodukt von 15 Mol Ethylenoxid an 1 Mol Stearylalkohol ;
$D_4$ Anlagerungsprodukt von 3 Mol Ethylenoxid an 1 Mol Alfol (8-10) ;
$D_5$ Anlagerungsprodukt von 5 Mol Ethylenoxid an 1 Mol Hexadecylalkohol ;
$D_6$ Anlagerungsprodukt von 18 Mol Ethylenoxid an 1 Mol Oleylalkohol ;
$D_7$ Anlagerungsprodukt von 6 Mol Ethylenoxid an 2 Mol Butyl-Phenol ;
$D_8$ Anlagerungsprodukt von 4 Mol Ethylenoxid an 2 Mol p-Kresol ;
$D_9$ Anlagerungsprodukt von 5 Mol Ethylenoxid an 1 Mol Tributylphenol ;
$D_{10}$ Anlagerungsprodukt von 8 Mol Ethylenoxid an 1 Mol Octylphenol ;
$D_{11}$ Anlagerungsprodukt von 2 Mol Ethylenoxid an 1 Mol Nonylphenol ;
$D_{12}$ Anlagerungsprodukt von 10 Mol Ethylenoxid an 1 Mol Nonylphenol ;
$D_{13}$ Anlagerungsprodukt von 10 Mol Ethylenoxid und 10 Mol Propylenoxid an 1 Mol Nonylphenol ;
$D_{14}$ Anlagerungsprodukt von 18 Mol Ethylenoxid an 1 Mol Oleylalkohol ;
$D_{15}$ Anlagerungsprodukt von 12 Mol Ethylenoxid an 1 Mol Oleinsäure ;
$D_{16}$ Anlagerungsprodukt von 8 Mol Ethylenoxid an 1 Mol o-Phenyl-phenol ;
$D_{17}$ Anlagerungsprodukt von 5 Mol Ethylenoxid und 5 Mol Propylenoxid an 1 Mol Alfol 12-14 ;
$D_{18}$ Anlagerungsprodukt von 15 Mol Ethylenoxid an 1 Mol Rizinusöl ;
$D_{19}$ Anlagerungsprodukt von 8 Mol Propylenoxid an 1 Mol Pentaerythrit ;
$D_{20}$ Anlagerungsprodukt von 35 Mol Ethylenoxid und 15 Mol Propylenoxid an 1 Mol Glycerin ;

$D_{21}$ Anlagerungsprodukt von 7 Mol Ethylenoxid an 1 Mol $C_9$-$C_{11}$-Oxoalkohol ;
$D_{22}$ Anlagerungsprodukt von 35 Mol Ethylenoxid an 1 Mol p-Nonylphenol ;
$D_{23}$ Anlagerungsprodukt von 2 Mol Ethylenoxid an 1 Mol Kokosölfettsäure-(N,N-bis-β-hydroxyethyl)amid ;
$D_{24}$ Anlagerungsprodukt von 5 Mol Ethylenoxid an 1 Mol p-Nonylphenol ;
$D_{25}$ Anlagerungsprodukt von 58 Mol Propylenoxid an 1 Mol Glycerin ;
$D_{26}$ Anlagerungsprodukt von 58 Mol Propylenoxid an 1 Mol Pentaerythrit.

## Beispiel 1

Eine Lösung von 10 g eines Anlagerungsproduktes von 8 Mol Ethylenoxid an 1 Mol Octylphenol (Komponente $D_{10}$) und 0,5 g Natriumlaurylsulfat in 200 g Wasser wird unter Rühren und Ueberleiten von Stickstoff auf 90 °C erwärmt. Zu dieser Lösung lässt man im Verlaufe von 60 Minuten eine Lösung von 1 g Dibenzoylperoxid in 40 g Acrylsäure zutropfen. Man erwärmt diese Lösung weitere 3 Stunden auf 90 °C und erhält 251 g einer viskosen Lösung mit einem Feststoffgehalt von 20,5 % entsprechend einer Ausbeute von 99 %. Die Polymerlösung hinterlässt beim Trocknen einen klaren Film.

## Beispiel 2

Eine Lösung von 15 g eines Anlagerungsproduktes von 10 Mol Ethylenoxid an 1 Mol Nonylphenol (Komponente $D_{12}$) in 150 g Wasser wird unter Rühren und Ueberleiten von Stickstoff auf 70 °C erwärmt. Zu dieser Lösung lässt man im Verlaufe von 30 Minuten eine Lösung von 1 g Dibenzoylperoxid in 35 g Acrylsäure zutropfen. Man erwärmt diese Lösung weitere 3 Stunden auf 70 °C und erhält 200 g einer viskosen Lösung mit einem Feststoffgehalt von 25,2 %, entsprechend einer Ausbeute von 98,4 %. Die Polymerlösung hinterlässt beim Trocknen einen Klaren, farblosen, nicht klebrigen Film.

## Beispiel 3

Eine Lösung von 20 g eines Adduktes der Formel

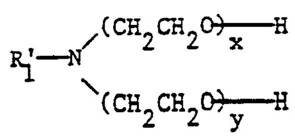

$x + y = 7$

$R_1' = 30\ \%\ C_{16}H_{33}$
$30\ \%\ C_{18}H_{37}$
$40\ \%\ CH_3(CH_2)_7CH = CH(CH_2)_8$

in 50 g Wasser wird unter Rühren und Ueberleiten von Stickstoff auf 90 °C erwärmt. Man lässt im Verlaufe von 20 Minuten eine Lösung von 97 g Dibenzoylperoxid in 20 Teilen Acrylsäure zutropfen und erwärmt diese Lösung weitere 3 Stunden auf 90 °C. Nach Verdünnung mit 95 g Wasser und Zugabe von 8 g einer 30 %igen Natriumhydroxidlösung erhält man 202 g einer viskosen Lösung mit einem Feststoffgehalt von 25,1 %, entsprechend einer Ausbeute von 98,4 %.

Die Polymerlösung hinterlässt beim Trocknen einen klaren, spröden Film.

## Beispiel 4

Eine Lösung von 20 g eines Anlagerungsproduktes von 35 Mol Ethylenoxid an 1 Mol Nonylphenol (Komponente $D_{22}$) und 0,5 g Natriumlaurylsulfat in 200 g Wasser wird unter Rühren und Ueberleiten von Stickstoff auf 90 °C erwärmt. Zu dieser Lösung lässt man im Verlaufe von 60 Minuten eine Lösung von 2 g Dibenzoylperoxid in 80 g Acrylsäure zutropfen. Man erwärmt diese Lösung weitere 3 Stunden auf 90 °C und erhält nach Zugabe von 2 ml einer 30 %igen Natriumhydroxidlösung 284 g einer viskosen Lösung mit einem Feststoffgehalt von 20 % entsprechend einer Ausbeute von 99,2 %.

Die Polymerlösung hinterlässt beim Trocknen einen klaren Film.

## Beispiel 5

Eine Lösung von 25 g eines Anlagerungsproduktes von 5 Mol Ethylenoxid an 1 Mol Nonylphenol (Komponente $D_{24}$) in 50 g Wasser wird unter Rühren und Ueberleiten von Stickstoff auf 90 °C erwärmt. Zu dieser Lösung lässt man im Verlaufe von 30 Minuten eine Lösung von 1 g Dibenzoylperoxid in 25 g Acrylsäure zutropfen. Man erwärmt die entstandene Emulsion weitere 3 Stunden auf 90 °C und erhält nach Zugabe von 100 g Wasser 201 g einer Emulsion mit einem Feststoffgehalt von 25 % entsprechend einer Ausbeute von 98,3 %. Die Emulsion hinterlässt beim Trocknen einen klaren Film.

## Beispiel 6

Eine Lösung von 30 g des sauren Phosphorsäureesters eines Anlagerungsproduktes von 10 Mol

Ethylenoxid an 1 Mol Nonylphenol (Komponente $A_{28}$) in 50 g Wasser wird unter Rühren und Ueberleiten von Stickstoff auf 90 °C erwärmt. Zu dieser Lösung lässt man im Verlaufe von 30 Minuten eine Lösung von 0,7 g Dibenzoylperoxid in 20 g Acrylsäure zutropfen. Man erwärmt diese Lösung weitere 3 Stunden auf 90 °C und erhält nach Zugabe von 100 g Wasser 200 g einer viskosen Lösung mit einem Feststoffgehalt von 25 % entsprechend einer Ausbeute von 98,5 %. Die Polymerlösung hinterlässt beim Trocknen einen klaren Film.

Beispiel 7

Eine Lösung von 25 g eines Anlagerungsproduktes von 58 Mol Propylenoxid an 1 Mol Glycerin (Komponente $D_{25}$) in 100 g Wasser wird unter Rühren und Ueberleiten von Stickstoff auf 80 °C erwärmt. Zu dieser Lösung lässt man im Verlaufe von 30 Minuten eine Lösung von 1 g Dibenzoylperoxid in 25 g Acrylsäure zutropfen. Man erwärmt die entstehende Emulsion weitere 3 Stunden auf 80 °C und erhält nach Zugabe von 50 g Wasser und 1 ml einer 30 %igen Natriumhydroxidlösung 201 g einer Emulsion mit einem Feststoffgehalt von 25 % entsprechend einer Ausbeute von 99,4 %. Die Emulsion hinterlässt beim Trocknen einen klaren Film.

Beispiel 8

40 g eines Anlagerungsproduktes von 10 Mol Ethylenoxid an 1 Mol Nonylphenol (Komponente $D_{12}$) werden unter Rühren und Ueberleiten von Stickstoff auf 90 °C erwärmt. Man lässt innerhalb 5 Minuten eine Lösung von 0,5 g Benzoylperoxid in 10 g Acrylsäure zutropfen und erwärmt den Kolbeninhalt weitere 2 Stunden auf 90 °C. Nach Verdünnung mit 150 g Wasser erhält man 200 g einer schwach viskosen Lösung mit einem Feststoffgehalt von 25 %, entsprechend einer Ausbeute von 98,4 %. Die Polymerlösung hinterlässt beim Trocknen eine klare, farblose, viskose Flüssigkeit.

Beispiel 9

Eine Lösung von 25 g eines Anlagerungsproduktes von 10 Mol Ethylenoxid an 1 Mol Nonylphenol (Komponente $D_{12}$) in 50 g Wasser wird unter Rühren und Ueberleiten von Stickstoff auf 90 °C erwärmt. Man lässt im Verlaufe von 30 Minuten eine Lösung von 1 g Benzoylperoxid in 25 g Acrylsäure zutropfen und erwärmt diese Lösung weitere 2 Stunden auf 90 °C. Nach Verdünnung mit 100 g Wasser und Zugabe von 5 g einer 30 %igen Natriumhydroxid-Lösung erhält man 206 g einer viskosen Lösung mit einem Feststoffgehalt von 25 %, entsprechend einer Ausbeute von 98,6 %. Die Polymerlösung hinterlässt beim Trocknen einen klaren, farblosen, nicht klebrigen Film.

Beispiel 10

Eine Lösung von 37,5 g der kationischen Komponente $B_{13}$ in 30 g Wasser wird unter Rühren und Ueberleiten von Stickstoff auf 90 °C erwärmt. Zu dieser Lösung lässt man im Verlaufe von 10 Minuten eine Lösung von 0,5 g Dibenzoylperoxid in 12,5 g Acrylsäure zutropfen. Man erwärmt diese Lösung weitere 3 Stunden auf 90 °C und erhält nach Zugabe von 120 g Wasser 200,5 g einer viskosen Lösung mit einem Feststoffgehalt von 25 % entsprechend einer Ausbeute von 98,7 %. Die Polymerlösung hinterlässt beim Trocknen einen klaren Film.

Beispiel 11

Eine Lösung von 10 g eines Anlagerungsproduktes von 2 Mol Ethylenoxid an 1 Mol Nonylphenol (Komponente $D_{11}$) und 0,5 g Natriumlaurylsulfat in 140 g Wasser wird unter Rühren und Ueberleiten von Stickstoff auf 90 °C erwärmt. Zu dieser Lösung lässt man im Verlaufe von 30 Minuten eine Lösung von 1 g Dibenzoylperoxid in 40 g Acrylsäure zutropfen. Man erwärmt die entstandene Emulsion weitere 3 Stunden auf 90 °C und erhält nach Zugabe von 13 g Wasser 204 g einer Emulsion mit einem Feststoffgehalt von 25 % entsprechend einer Ausbeute von 99,2 %. Die Emulsion hinterlässt beim Trocknen einen klaren Film.

Beispiel 12

Eine Lösung von 7,5 g der kationischen Komponente $B_{13}$ in 150 g Wasser wird unter Rühren und Ueberleiten von Stickstoff auf 70 °C erwärmt. Zu dieser Lösung lässt man im Verlaufe von 30 Minuten eine Lösung von 0,5 g Dibenzoylperoxid in 42,5 g Acrylsäure zutropfen. Man erwärmt diese Lösung weitere 3 Stunden auf 70 °C und erhält nach Zugabe von 137 g Wasser 337 g einer viskosen Lösung mit einem Feststoffgehalt von 15 % entsprechend einer Ausbeute von 99,5 %. Die Polymerlösung hinterlässt beim Trocknen einen klaren Film.

Beispiel 13

Eine Lösung von 2,5 g eines Anlagerungsproduktes von 35 Mol Ethylenoxid an 1 Mol Nonylphenol

(Komponente $D_{22}$) in 150 g Wasser wird unter Rühren und Ueberleiten von Stickstoff auf 70 °C erwärmt. Zu dieser Lösung lässt man im Verlaufe von 30 Minuten eine Lösung von 0,5 g Dibenzoylperoxid in 47,5 g Acrylsäure zutropfen. Man erwärmt diese Lösung weitere 3 Stunden auf 70 °C und erhält nach Zugabe von 132 g Wasser 332 g einer viskosen Lösung mit einem Feststoffgehalt von 15 % entsprechend einer Ausbeute von 98,8 %. Die Polymerlösung hinterlässt beim Trocknen einen klaren Film.

Beispiel 14

Eine Lösung von 2,5 g eines Polyethylenoxidadduktes der Formel

$$C_{12}—C_{18}—H_{25}—H_{37}—O(CH_2CH_2O)_{18}H$$

und 0,5 g Natriumlaurylsulfat in 150 g Wasser wird unter Rühren und Ueberleiten von Stickstoff auf 70 °C erwärmt. Zu dieser Lösung lässt man eine Lösung von 0,5 g Dibenzoylperoxid in 24 g Acrylsäure und 23,5 g Methacrylsäure zutropfen. Man erwärmt die Lösung 3 Stunden auf 70 °C und erhält 200 g einer Emulsion mit einem Feststoffgehalt von 25 % entsprechend einer Ausbeute von 99,2 %. Die Emulsion hinterlässt beim Trocknen einen klaren Film.

Beispiel 15

20 g eines Adduktes aus Nonylphenol mit 2 Mol Ethylenoxyd (Komponente $D_{11}$) und 0,7 g Natriumlaurylsulfat werden in 140 g Wasser unter Rühren und Ueberleiten von Stickstoff auf 90 °C erwärmt. Zu dieser Vorlage lässt man während 30 Minuten eine Lösung von 1 g Benzoylperoxid in 30 g Acrylsäure zutropfen. Man erwärmt die erhaltene Emulsion weitere 3 Stunden auf 90 °C und erhält nach Zugabe von 13 g Wasser 204 g einer viskosen Emulsion mit einem Feststoffgehalt von 25 %. Die Emulsion hinterlässt beim Trocknen einen klaren Film.

Beispiel 16

Eine Lösung von 10 g eines Adduktes aus Nonylphenol mit 10 Mol Ethylenoxyd (Komponente $D_{12}$), 1 g Natriumlaurylsulfat und 3 ml Natriumhydroxidlösung (30 %) in 209 g Wasser wird unter Rühren und Ueberleiten von Stickstoff auf 90 °C erwärmt. Zu dieser Lösung lässt man während 60 Minuten eine Lösung von 1 g Benzoylperoxid in 40 g Acrylsäure zutropfen. Man erwärmt die Lösung weitere 3 Stunden bei 90 °C und erhält 261,5 g einer viskosen Lösung mit einem Feststoffgehalt von 20 %, entsprechend einer Ausbeute von 98 %. Die Lösung hinterlässt beim Trocknen einen klaren Film.

Beispiel 17

Eine Lösung von 10 g der Komponente $B_{13}$ in 150 g Wasser wird unter Rühren und Ueberleiten von Stickstoff auf 70 °C erwärmt. Zu dieser Lösung lässt man innerhalb von 30 Minuten eine Lösung von 0,5 g Benzoylperoxyd in 40 g Acrylsäure zutropfen. Man erwärmt die Lösung weitere 4 Stunden auf 70 °C und erhält nach Zugabe von 45 g Wasser 245,5 g einer hochviskosen Lösung mit einem Feststoffgehalt von 20,3 %, entsprechend einer Ausbeute von 98,9 %. Die Polymerlösung hinterlässt beim Trocknen einen klaren Film.

Beispiel 18

Eine Lösung von 25 g eines Adduktes von Nonylphenol mit 9 Mol Ethylenoxyd in 50 g Wasser wird unter Rühren und Ueberleiten von Stickstoff auf 90 °C erwärmt. Zu dieser Lösung lässt man innerhalb von 30 Minuten eine Lösung von 1 g Benzoylperoxid in 25 g Acrylsäure zutropfen. Man erwärmt die Reaktionsmischung weitere 2 Stunden auf 90 °C und erhält nach Zugabe von 95 g Wasser und 5 ml wässriger Natriumhydroxidlösung (30 %) 251 g einer viskosen Lösung mit einem Feststoffgehalt von 20,1 %, entsprechend einer Ausbeute von 99 %. Die Polymerlösung hinterlässt beim Trocknen einen klaren Film.

Beispiel 19

Eine Lösung von 30 g der Komponente $D_{12}$ une 0,5 g Na-Laurylsulfat in 150 g Wasser wird unter Rühren und Ueberleiten von Stickstoff auf 90 °C erwärmt. Zu dieser Lösung lässt man innerhalb 30 Minuten eine Lösung von 1 g Benzoylperoxid in 20 g Acrylsäure zutropfen. Man erwärmt die Reaktionsmischung weitere 2 Stunden auf 90 °C und erhält nach Zugabe von 1 ml wässriger Natriumhydroxidlösung (30 %) 202,5 g einer viskosen Lösung mit einem Feststoffgehalt von 25,3 %, entsprechend einer Ausbeute von 99,2 %. Die Polymerlösung hinterlässt nach dem Trocknen einen klaren Film.

Beispiel 20

Eine Lösung von 20 g der Komponente $D_{12}$ in 150 g Wasser wird unter Rühren und Ueberleiten von Stickstoff auf 90 °C erwärmt. Zu dieser Lösung lässt man innerhalb 30 Minuten eine Lösung von 1 g Benzoylperoxid in 30 g Acrylsäure zutropfen. Man erwärmt die Reaktionsmischung weitere 2 Stunden auf 90 °C und erhält nach Zugabe von 1,5 ml wässriger Natriumhydroxidlösung (30 %) 202,5 g einer viskosen Lösung mit einem Feststoffgehalt von 25,3 % entsprechend einer Ausbeute von 98,8 %. Die Polymerlösung hinterlässt beim Trocknen einen klaren Film.

Beispiel 21

Eine Lösung von 40 g der Komponente $D_{12}$ und 0,5 g Na-Laurylsulfat in 150 g Wasser wird unter Rühren und Ueberleiten von Stickstoff auf 70 °C erwärmt. Zu dieser Lösung lässt man innerhalb 30 Minuten eine Lösung von 0,5 g Benzoylperoxid in 10 g Acrylsäure zutropfen. Man erwärmt die Reaktionsmischung weitere 5 Stunden auf 70 °C und erhält nach Zugabe von 2 ml wässriger Natriumhydroxidlösung (30 %) 203 g einer schwachviskosen Lösung mit einem Feststoffgehalt von 25 %, entsprechend einer Ausbeute von 98,4 %. Die Polymerlösung hinterlässt beim Trocknen einen klaren Film.

Verfährt man analog Beispiel 21, verwendet jedoch 15 g der Komponente $D_{22}$ und 85 g Acrylsäure, so erhält man das entsprechende Polymer eben falls in praktisch quantitativer Ausbeute.

Beispiel 22

Eine Lösung von 65 g eines Anlagerungsproduktes von 10 Mol Ethylenoxid an 1 Mol Nonylphenol (Komponente $D_{12}$) in 65 g Wasser wird unter Rühren und Ueberleiten von Stickstoff auf 80 °C erwärmt. In dieser Lösung lässt man im Verlaufe von 30 Minuten eine Lösung von 65 g 2-Acrylamino-2-methylpropansulfonsäure in 65 g Wasser und gleichzeitig, getrennt eine Lösung von 0,3 g Kaliumperoxidisulfat in 30 g Wasser zutropfen. Man hält die Reaktionsmischung weitere 2 Stunden bei 80 °C und 1 Stunde bei 90 °C, verdünnt mit 230 g Wasser und erhält 520 g einer viskosen gelblichen Lösung mit einem Feststoffgehalt von 25 %, entsprechend einer Ausbeute von 100 %. Die Polymerlösung hinterlässt beim Trocknen einen klaren Film.

Verfährt man analog Beispiel 22, verwendet jedoch anstelle von 65 g der Komponente $D_{12}$ une 65 g 2-Acrylamido-2-methylpropansulfonsäure die folgenden Kombinationen von Ausgangsstoffen

a) 65 g der Komponente $D_{12}$ und
65 g Acrylsäure
b) 65 g der Komponente $D_{12}$ und
65 g Methacrylsäure
c) 52 g der Komponente $A_{28}$ und
78 g Acrylsäure
d) 65 g der Komponente $A_{15}$ und
65 g Acrylsäure
e) 65 g der Komponente $A_{31}$ und
65 g Acrylsäure
f) 65 g der Komponente $A_8$ und
65 g Acrylsäure
g) 65 g der Verbindung der Formel

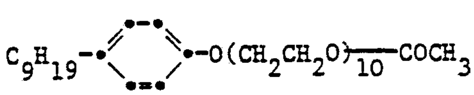

65 g Acrylsäure
h) 65 g der Komponente $D_{12}$ und
65 g Itaconsäure, die in 150 g Wasser mit Hilfe von Natriumhydroxidlösung (30 %) gelöst ist ; oder
i) 65 g der Komponente $D_{12}$ und
65 g Maleisäure, die in 150 g Wasser mit Hilfe von 22,4 g Natriumhydroxidlösung (30 %) gelöst ist,

so erhält man entsprechende Pfropfpolymerisate ebenfalls in praktisch quantitativer Ausbeute.

Beispiel 23

Eine Lösung von 0,6 g Dibenzoylperoxid in 40 g der Verbindung der Formel

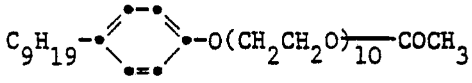 und

wird unter Rühren und Ueberleiten von Stickstoff auf 80 °C erwärmt. In dieser Lösung lässt man im Verlaufe von 15 Minuten eine Lösung von 40 g Maleinsäureanhydrid in 125 g Toluol zutropfen. Man hält die Lösung anschliessend 2 Stunden bei 80 °C und 1 Stunde bei 90 °C und destilliert danach Toluol im Vakuum ab. Der Rückstand wird durch Erwärmen in 237 g Wasser gelöst. Man erhält 316 g einer braunen Lösung mit einem Feststoffgehalt von 25 %, entsprechend einer Ausbeute von 98 %. Die Lösung hinterlässt beim Trocknen eine viskose Flüssigkeit.

### Beispiel 24

Eine Lösung von 5 g der Komponente $B_8$ in 180 g Wasser wird unter Rühren und Ueberleiten von Stickstoff auf 80 °C erwärmt. Zu dieser Lösung lässt man im Verlaufe von 30 Minuten eine Lösung von 1 g Dibenzoylperoxid in 45 g Acrylsäure zutropfen. Man hält die Reaktionsmischung weitere 2 Stunden bei 80 °C und 1 Stunde bei 90 °C und erhält 230 g einer viskosen gelblichen Lösung mit einem Feststoffgehalt von 22 %, entsprechend einer Ausbeute von 99,5 %. Die Lösung hinterlässt beim Trocknen einen klaren Film.

### Beispiel 25

Eine Emulsion von 10 g eines Anlagerungsproduktes von 58 Mol Propylenoxid an Pentaerythrit (Komponente $D_{26}$) in 180 g Wasser wird unter Rühren und Ueberleiten von Stickstoff auf 90 °C erwärmt. Zu dieser Emulsion lässt man innerhalb 120 Minuten eine Lösung von 1 g Benzoylperoxid in 40 g Acrylsäure zutropfen. Man erwärmt das Reaktionsgemisch weitere 3 Stunden auf 90 °C und erhält 230 g einer viskosen Emulsion mit einem Feststoffgehalt von 22 %, entsprechend einer Ausbeute von 99,5 %. Die Emulsion hinterlässt beim Trocknen einen klaren Film.

## Anwendungsbeispiele

### Beispiel 1

Als Vergrauungsinhibitor in Waschmitteln.

Ein Polyester/Baumwolle (65/35-Mischgewebe (165 g/m$^2$) wird mit einer wässerigen Flotte foulardiert, welche

50 g/l 4,5-Dihydroxy-N,N'-dimethylolethylenharnstoff (45 %ige wässrige Lösung)

15 gl Magnesiumchlorid · 6 $H_2O$

enthält und mit Essigsäure auf pH 6 eingestellt worden ist. Die Flottenaufnahme beträgt 80 %. Das Gewebe wird 2 Minuten bei 80 °C getrocknet und während 4 Minuten bei 160 °C thermofixiert.

Das so ausgerüstete Gewebe wird bei 60 °C während 30 Minuten mit einer künstlich verschmutzten Waschflotte (Flottenverhältnis 1 : 30) behandelt, welche

6 g/l eines Standardwaschmittels,

1 g/l Lanolin

4 g/l Luftfilterstaub und

1 g/l Pfropfpolymerisat gemäss einem der Beispiele 2, 3, 5 und 10 enthält. Anschliessend wird mit kaltem Wasser gut gespült. Man erhält ein Gewebe, das sehr wenig angeschmutzt ist.

Die Gewebevergrauung bzw. die Remission wird mit dem Spektralphotometer gemessen.

(Filter 6/Durchlässigkeitsmaximum bei 461 µm).

In der folgenden Tabelle sind die entsprechenden prozentualen Remissionswerte angegeben.

| Pfropfpolymerisat gemäss Beispiel Nr. | Remission in % |
|---|---|
| 2 | 78 |
| 3 | 67 |
| 5 | 65 |
| 10 | 63 |
| ohne Polymerisat | 41 |
| nicht verschmutzt | 100 |

### Beispiel 2

Antischaummittel für alkoholische Gärprozesse

In einem 500 ml Messzylinder wird eine Lösung gefüllt, welche aus

20 g Rohzucker aus Zuckerrohr

10 g Melasse

2 g Trockenbackhefe und

50 ppm des gemäss Beispiel 7 hergestellten Pfropfpolymerisates in

200 g Permutitwasser besteht.

Diese Lösung wird zur Gärung 3 Stunden stehen gelassen. Durch den Zusatz des Pfropfpolymerisates bildet sich in dieser Zeit auf der Flüssigkeitsoberfläche kein Schaum. Der Gärvorgang wird durch das Pfropfpolymerisat nicht gestört.

Beispiel 3

Herstellung eines Entlüfters für Papierstoffsuspensionen

15 g Stearylalkohol und 10 g Stearinsäure werden bei 70 °C geschmolzen und in einer 70 °C warmen Lösung, die

3 des gemäss Beispiel 1 hergestellten Pfropfpolymerisates in

72 g Wasser enthält unter Rühren dispergiert. Anschliessend wird die Dispersion unter Rühren abgekühlt.

Man erhält eine flüssige, feinteilige und lagerbeständige Dispersion, die in kaltem Wasser gut verdünnbar ist und die beim Aufbringen auf eine wässerige Oberfläche spontan spreitet.

In einer Papierstoffsuspension mit einem Ausgangsluftgehalt von 2,7 Vol.-% wird durch einen Zusatz von 0,05 % (bezogen auf atro Papierstoff) zu dieser Dispersion der Luftgehalt auf 0,75 % reduziert.

Beispiel 4

In einem Baumfärbeapparat werden 100 kg eines Gewebes aus Poly(ethylenglykolterephthalat) in 1 000 Liter Wasser vorgenetzt. Alsdann wird die Flotte auf 70 °C erhitzt, worauf folgende Zusätze zugegeben werden :

3 000 g eines Gemisches aus

70,0 % Trimethylbenzol

11,1 % Paraffinöl

13,4 % Ammoniumsalz des sauren Schwefelsäureesters des Anlagerungsproduktes von 2 Mol Ethylenoxid an 1 Mol p-Nonylphenol und

5,5 % des Anlagerungsproduktes von 9 Mol Ethylenoxyd an 1 Mol p-Nonylphenol

4 000 g eines Farbstoffes der Formel

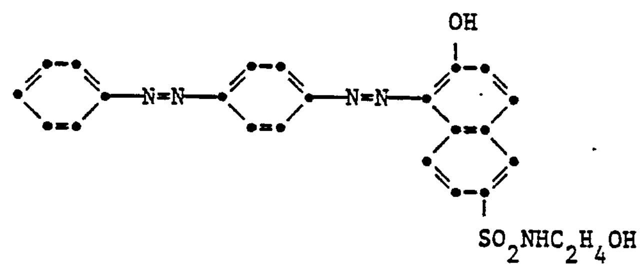

(101)

und

300 g einer wässerigen Emulsion (1) enthaltend

10 % Silikonöl

40 % einer 25-%igen wässerigen Lösung des gemäss Beispiel 11 hergestellten Pfropfpolymerisates,

10 % 2-Ethyl-n-hexanol, und

40 % Wasser.

Danach wird die Färbeflotte mit 85-%iger Ameisensäure auf pH 5,5 eingestellt und im Verlauf von 30 Minuten auf 120 °C erhitzt, worauf das Gewebe 30 Minuten bei dieser Temperatur gefärbt wird. Anschliessend wird die Flotte abgekühlt und das gefärbte Gewebe gespült und getrocknet. Man erhält eine farbstarke und reibechte rote Färbung.

Durch den Zusatz der Emulsion (1) ist das Färbesystem sowie das Ueberlaufgefäss ständig schaumfrei. Die Bildung von hellen Flecken durch Lufteinschlüsse im Material wird vermieden.

Beispiel 5

In einem Muff-Färbeapparat werden 100 kg eines Garnes aus Poly(ethylenglykolterephthalat) in 1 200 Liter Wasser auf 60 °C erwärmt. Hierauf werden folgende Zusätze der Flotte zugegeben :

2 400 g Ammoniumsulfat

2 000 g einer 70-%igen, wässrigen Lösung des Ammoniumsalzes des sauren Schwefelsäureesters eines Anlagerungsproduktes aus Glycerin und Propylenoxyd mit einem Molekulargewicht von 4 200,

3 700 g eines Farbstoffes der Formel

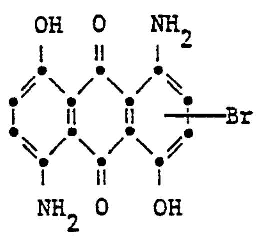

(102)

und

450 g einer wässerigen Emulsion (2) enthaltend

15 % Silikonöl
12 % 2-Ethyl-n-hexanol
40 % einer 35-%igen wässerigen Lösung des gemäss Beispiel 15 hergestellten Pfropfpolymerisates
3 % Ethanolamin und
30 % Wasser.

Man stellt das Färbebad mit 85-%iger Ameisensäure auf pH 5 ein und erwärmt es während 45 Minuten auf 130 °C, worauf das Garn während 60 Minuten bei dieser Temperatur gefärbt wird. Anschliessend wird das Bad abgekühlt und das gefärbte Garn gespült und getrocknet. Man erhält eine farbstarke, egale und reibechte blaue Färbung des so gefärbten Garnes.

Das Färbebad, das Ueberlaufgefäss und die Muffs werden durch den Zusatz der Emulsion (2) vollständig entlüftet.

Beispiel 6

100 kg eines Gewebes aus 50 % Baumwolle und 50 % Poly(ethylenglykolterephthalat) werden in einer HT-(Hochtemperatur)-Haspelkufe mit 3 000 g einer wässrigen Flotte, die 54 g eines Farbstoffes der Formel

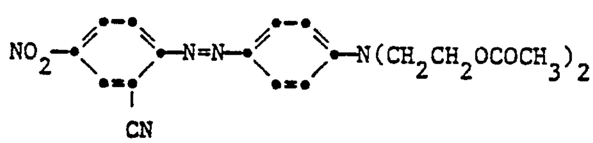

(103)

27 g eines Farbstoffes der Formel

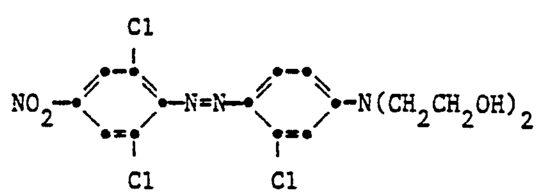

(104)

130 g eines Farbstoffes der Formel

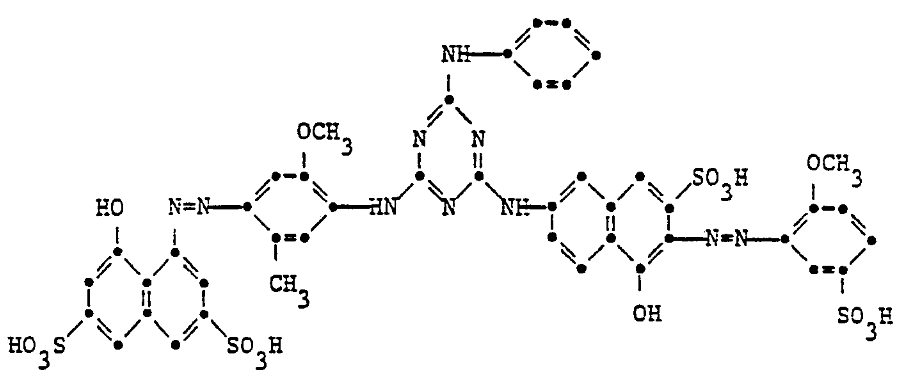

(105)

10 g eines Farbstoffes der Formel

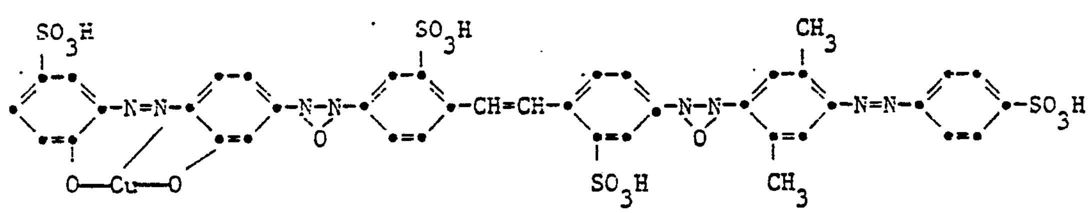

(106)

3 000 g eines Gemisches aus
16,5 % Phenylbenzoat
38,5 % 2-Methylphenylbenzoat
8 % Aethylenglykol
17 % Isopropanol
2 % Aethanolamin
1,5 % Pineoil und

16,5 % des sauren Phosphorsäureesters des Anlagerungsproduktes von 10 Mol Ethylenoxyd an 1 Mol p-Nonylphenol

6 000 Ammoniumsulfat und

700 g der Emulsion (1) gemäss Beispiel 4

enthält und einen pH-Wert von 5,6 aufweist, während 20 Minuten bei 40 °C behandelt. Danach fügt man der Flotte 10 kg Natriumsulfat zu und erhitzt die Flotte während 40 minuten auf 115 °C. Man färbt das Gewebe während 30 Minuten bei dieser Temperatur und kühlt dann das Bad ab. Das gefärbte Gewebe wird gespült und getrocknet.

Durch Zugabe der Emulsion (1) ist ein schaumfreies Färben möglich. Das Gewebe neigt in der Haspelkufe nicht zum Schwimmen, wodurch eine sehr egale Färbung erhalten wird.

Beispiel 7

Auf einem Kurzflotten-Jet werden 100 kg Baumwolltricot in 600 Liter entionisiertem Wasser bei 40 °C eingenetzt. In die Flotte gibt man dann 36 kg Natriumchlorid, 5 kg eines Farbstoffes der Formel

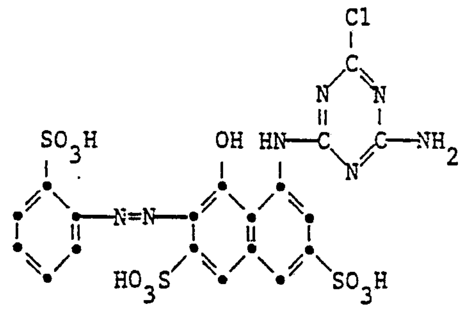

(107)

und 0,3 kg der Emulsion (2) gemäss Beispiel 5.

Man färbt das Gewebe auf dem Kurzflotten-Jet während 45 Minuten bei 40 °C. Dann erfolgt der Zusatz von 0,6 kg kalziniertem Natriumcarbonat und nach weiteren 5 Minuten von 1,2 kg einer wässrigen 36-%igen Natriumhydroxydlösung. Das Tricot wird während weiteren 40 Minuten gefärbt, anschliessend gespült und nachgewaschen. Es resultiert eine echte, egale Rotfärbung des Tricots. Während des Färbeprozesses tritt keine Störung des Warenlaufes auf.

Beispiel 8

In einem Zirkulationsapparat wird eine Kreuzspule aus 70 g Baumwolle bei 30 °C in 500 ml Wasser eingenetzt. Hierauf werden zur Flotte folgende Zusätze gegeben :

10 ml einer wässrigen 30-%igen Natriumhydroxydlösung,

3 g einer 86-%igen Natriumhydrosulfitlösung

0,3 g der Emulsion (1) gemäss Beispiel 4,

0,5 g eines Küpenfarbstoffes bestehend aus einer Mischung von Vat Blue 4 C.I. 69800 und Vat Blue 6 C.I. 69825 (1 : 3), welche mit Wasser und 5 ml einer 30-%igen, wässrigen Natriumhydroxydlösung vordispergiert worden ist.

Nach der gleichmässigen Verteilung der Zusätze wird die Färbeflotte im Verlauf von 30 Minuten auf 60 °C erwärmt und die Baumwolle 30 Minuten bei dieser Temperatur gefärbt. Danach werden der Färbeflotte 6 g Natriumchlorid zugesetzt, worauf die Baumwolle weitere 30 Minuten bei 60 °C gefärbt wird. Anschliessend wird das Färbegut warm und kalt gespült und getrocknet. Man erhält eine gleichmässige und echte blaue Färbung.

Beispiel 9

Auf einer geschlossenen Haspelkufe werden 100 kg Tricot aus Rohbaumwolle in 2 500 Liter Wasser unter Zusatz von :

7 500 g einer Zubereitung bestehend aus

43 % hydrolysiertem Polymaleinsäureanhydrid (50-%ige freie Säure)

14 % einer wässrigen 25-%igen Ammoniaklösung und

43 % einer 30-%igen, wässrigen Lösung eines Kondensationsproduktes aus Polyäthylenglykol (MG 1500), Maleinsäureanhydrid, Anlagerungsprodukt von 8 Mol Propylenoxid an 1 Mol Pentaerythrit und Stearinsäure

eingenetzt. Hierauf werden der Flotte 40 Liter einer 30-%igen, wässrigen Natriumhydroxydlösung und 10

kg einer 86-%igen Natriumhydrogensulfitlösung zugegeben. Dann erfolgt der Zusatz von 2 000 g der Emulsion (2) gemäss Beispiel 5. Anschliessend wird eine Stammküpe bestehend aus

| | | |
|---|---|---|
| 75 | l | Wasser |
| 2 500 | g | einer 85-%igen wässrigen Natriumhydrogensulfitlösung |
| 6 | l | einer wässrigen 30-%igen Natriumhydroxydlösung |
| 1 000 | g | des Küpenfarbstoffes, Vat Yellow 3 C.I. 67300 und |
| 500 | g | des Küpenfarbstoffes, Vat Violet 9 C.I. 60005 zugegeben. |

Die Färbeflotte wird im Verlauf von 30 Minuten auf 70 °C erwärmt und die Baumwolle während 30 Minuten bei dieser Temperatur gefärbt.

Anschliessend wird das Färbegut gespült und in fliessendem kaltem Wasser oxydiert. Nach dem Trocknen resultiert eine egale Färbung. Das Tricot hat einen angenehm weichen Griff und ist faltenfrei.

Durch den Zusatz der Emulsion (2) ist das System schaumfrei und das Tricot neigt nicht zum Schwimmen.

## Beispiel 10

Schlammenwässerungshilfsmittel.

Zu 50 ml eines industriellen Klärschlamms mit einem Feststoffgehalt von 1,6 % werden 625 ppm eines gemäss Beispiel 16 hergestellten Pfropfpolymerisates zugesetzt und während 2 Minuten gerührt. Anschliessend wird diese Schlammprobe durch einen Trichter mit Baumwollfilter (Rohbaumwolle, 210 g/m$^2$) filtriert, wobei das Filtrat in einem Messzylinder aufgefangen wird. Nach 10 Minuten hat sich 39,5 ml Filtrat angesammelt. Eine Vergleichsprobe ohne Zusatz des obigen Pfropfpolymerisates ergibt eine Filtratmenge von nur 13,5 ml.

## Beispiel 11

Antischaummittel für Meerwasserentsalzungsanlagen.

Eine 7-%ige wässrige Natriumchloridlösung dient als Meerwassermodell. 400 ml dieser Natriumchloridlösung werden in einem Glaszylinder auf 90 °C aufgeheizt. Hierauf werden 16 Liter Luft pro Stunde durch eine feinporige Glasfritte in die Testlösung eingeleitet. Nach 3 Minuten stellt sich eine Schaumhöhe von 3,5 cm ein. Durch Zusatz von 0,5 ppm des gemäss Beispiel 7 hergestellten Pfropfpolymerisates wird die Schaumbildung während mindestens 30 Minuten verhindert.

## Beispiel 12

Ein stark schäumendes, industrielles Abwasser, das eine Oberflächenspannung von 32,7 dyn/cm aufweist, wird in den Belebtschlammbecken einer Abwasserreinigungsanlage mit der mit Wasser im Verhältnis 100 : 1 verdünnten Emulsion (1) gemäss Beispiel 4 besprüht. Die Einsatzmenge wird so dosiert, dass für die gesamte Abwassermenge 5 ppm verwendet werden. Hierdurch ist es möglich, die Höhe des Schaumes auf dem Abwasser bei etwa 10 bis 20 cm konstant zu halten. Ohne den Einsatz der Emulsion (1) bildet sich soviel Schaum, dass die Belebtschlammbecken nach etwa 30 bis 60 Minuten überschäumen. Aehnliche Ergebnisse werden erzielt, wenn man an Stelle der Emulsion (1) gemäss Beispiel 4 5 ppm der im Verhältnis 100 : 1 verdünnten Emulsion (2) gemäss Beispiel 5 einsetzt. Zu bemerken ist noch, dass die starke Schaumbildung durch den Lufteintrag mittels eines grossen Schaufelrührers stark gefördet wird. Dieser Lufteintrag ist aber notwendig, um den biologischen Abbau der Ballaststoffe zu ermöglichen.

## Beispiel 13

1 000 ml Wasser (Wassertemperatur 20 bis 25 °C) werden mit 15 ppm Natriumdodecylbenzolsulfonat versetzt und mit Hilfe eines Mischers und durch Einblasen von Luft (32 l Luft/Stunde) zum Schäumen gebracht. Nach 5 Minuten wird eine Schaumhöhe von 10 cm erreicht. Es erfolgt die Zugabe von 3 ppm der Emulsion (1) gemäss Beispiel 4, welche vor der Zugabe im Verhältnis 100 : 1 mit Wasser verdünnt worden ist.

Der Schaum ist nach 2 Sekunden vollständig eliminiert. Durch weiteres Mischen und Lufteinblasen wird auch nach 30 Minuten keine erneute Schaumbildung beobachtet. Führt man den Test in gleicher Weise, aber ohne Zusatz der Emulsion (1) durch, so steigt der Schaum auf über 15 cm Höhe an.

## Beispiel 14

In einem Becherglas wird ein Liter Schwarzlauge (Abwasser des alkalischen Holzaufschlusses bei der Zellstoffabrikation) auf 80 °C erhitzt und mittels eines Vibrationsmischers Schaum erzeugt.

Die Luft wird durch den Vibrationsmischer zudosiert. Bei einer Schaumhöhe von 13 cm werden jeweils 250 ppm der Emulsion (1) gemäss Beispiel 4 oder einer wässrigen Emulsion (3) enthaltend

10 % Silikonöl
10 % 2-Ethyl-n-hexanol
2 % eines Siloxan-Oxyalkylencopolymerisates mit einem Trübungspunkt von 38 °C (Silikonsurfactant L 546)
40 % einer 35%igen wässerigen Lösung des gemäss Beispiel 15 hergestellten Pfropfpolymerisats
3 % Ethanolamin und
35 % Wasser

zudosiert. Der Schaum wird vollständig eliminiert (Dauerwirkung). Verwendet man konventionelle Silikonantischaummittel-Emulsionen, so kann man zwar spontan einen Antischaumeffekt erreichen, jedoch ohne Dauerwirkung. Die besondere Wirkung der Emulsionen (1) oder (3) ist darauf zurückzuführen, dass diese sehr alkalibeständig ist. Der pH-Wert der Schwarzlauge liegt bei ca. 13,5.

### Beispiel 15

In einer industriellen Abluftreinigungsanlage wird durch Farbstoffe und Tenside die der Luft entzogen werden, in zunehmendem Masse Schaum erzeugt. Durch Zusatz von 400 ppm der Emulsion (1) gemäss Beispiel 4 oder der Emulsion (3) gemäss Beispiel 14 konnte das Aufschäumen vollständig vermieden werden.

### Beispiel 16

Waschmittel mit Soil-Redeposition-Inhibitor-Effekt. Gewaschen wird gemäss folgendem Waschverfahren ein mit Russ und Motorenöl künstlich angeschmutztes Mischgewebe aus Polyester und Baumwolle. Waschverfahren :

| | |
|---|---|
| Apparatur : | AHIBA Färbeapparat mit Drall |
| Temperaturzeit : | 30 Minuten bei 60 °C |
| Einsatzmenge : | jeweils 1 g/l Wirksubstanz |
| pH-Wert : | mit Natriumcarbonat auf pH 10 eingestellt |
| Flottenverhältnis : | 1 : 20 |

Nach Beendigung des Waschvorgangs wird jedes Gewebe separat in kaltem Wasser gespült, entwässert und getrocknet. Dann erfolgt das Ausmessen der Farbdifferenz nach DIN 6174. Das nicht ausgewaschene Gewebe erhält die Reflexionszahl O. Je höher die Zahl ist, desto besser ist der Wascheffekt.

(Siehe Tabelle Seite 19 f.)

| Waschvorgang / Wirksubstanzen. | Reflexionszahl nach DIN 6174 |
|---|---|
| Permutitwasser allein ohne Wirksubstanz | 10.49 |
| Anlagerungsprodukt von 9 Mol Ethylenoxid an 1 Mol Nonylphenol | 26,07 |
| Pfropfpolymerisat gemäss Beispiel 21, Nachsatz | 29,0 |
| Pfropfpolymerisat gemäss Beispiel 12 | 28,37 |
| Pfropfpolymerisat gemäss Beispiel 17 | 30,3 |
| Pfropfpolymerisat gemäss Beispiel 3 | 31,77 |
| Pfropfpolymerisat gemäss Beispiel 2 | 30,13 |
| Pfropfpolymerisat gemäss Beispiel 5 | 30,77 |
| Pfropfpolymerisat gemäss Beispiel 18 | 35,38 |
| Pfropfpolymerisat gemäss Beispiel 19 | 33,35 |
| Pfropfpolymerisat gemäss Beispiel 20 | 32,46 |
| Pfropfpolymerisat gemäss Beispiel 21 | 34,0 |

Dass der Wascheffekt der Pfropfpolymerisate besser ist als der von Nonylphenolglykolether, ist darauf zurückzuführen, dass die Pfropfpolymerisate auch das Wiederaufziehen des abgelösten Schmutzes gut verhindern.

Beispiel 17

Antistatikum für Polyamid-Teppiche.

Ein Polyamid 6,6-Teppich wird bei 40 °C während 30 Minuten mit einer Flotte (Flottenverhältnis 1 : 40) gewaschen, welche

1 g/l eines Gemisches aus 1-Benzyl-2-heptadecyl-benzimidazol-disulfonsaures Natrium und Kokosfettsäurediethanolamid (2 : 1)
1 g/l Trinatriumphosphat und
1 g/l Ethylendiamintetraessigsäure-Natriumsalz

enthält. Alsdann werden 100 g dieses vorgewaschenen Teppichs mit einer wässerigen Lösung behandelt, die mit

1 g des gemäss Beispiel 20 hergestellten Pfropfpolymerisates als 100 %ige trockene Substanz,
5 g Natriumacetat und
4 Liter Permutitwasser vorbereitet und mit Essigsäure auf pH 5 eingestellt worden ist. Die Behandlung erfolgt bei Kochtemperatur und dauert 30 Minuten. Nach der Behandlung wird der Teppich gespült und getrocknet. Der so behandelte Teppich zeigt eine elektrostatische Aufladung von 870 Volt. Die elektrostatische Aufladung des nur vorgewaschenen Teppichs beträgt dagegen 8 350 Volt.

Beispiel 18

2,5 g eines künstlich angeschmutzten Baumwollgewebes (EMPA-Testgewebe, beschmutzt mit Russ, Mineralöl, Eiweiss, Tinte und Eisenoxid) und 2,5 g eines Begleitgewebes aus Baumwolle werden in einer Waschflotte bei 40 °C während 30 Minuten gewaschen. Die Waschflotte enthält 100 ml Wasser mit einer Härte von 10-11° dH und 0,4 g eines flüssigen Waschmittels (1) bestehend aus 98 % einer 25 %igen wässrigen Lösung des Pfropfpolymerisates gemäss Beispiel 9 und 2 % Carboxymethylcellulose, sowie 50 g Glaskugeln von 2 mm Durchmesser. Ausserdem wird die Waschflotte mit Natriumcarbonat auf einen pH-Wert von 10 gestellt. Nach dem Waschen wird gespült und getrocknet.

Beurteilt wird die Waschwirkung aufgrund der beim Waschen aufgetretenen Aufhellung des verschmutzten Gewebes. Als Massstab dient der Graumassstabl BS 2662/1961 (BS = British Standard). Dabei steht die Note 5 für den besten Effekt (praktisch bei diesem Testgewebe nicht erreichbar) und die Note 1 für den geringsten Effekt (keine Waschwirkung).

Das gewaschene Gewebe zeigt nach der Behandlung eine Note von 4.

Die Anschmutzung des Begleitgewebes wird farbmetrisch gemessen, wonach der Weissgrad (Ciba-Geigy-Methode) bestimmt wird.

Vor der Behandlung ist der Weissgrad des Begleitgewebes 72. Nach der Behandlung resultiert ein Weissgrad von 70. Es erfolgt somit praktisch kein Wiederaufziehen des abgelösten Schmutzes.

Anstelle des verwendeten Waschmittels (1) können mit ähnlichem Erfolg folgende Waschmittel (2), (3) oder (4) eingesetzt werden.

Waschmittel (2) bestehend aus

| | |
|---|---|
| 50 % | des Pfropfpolymerisates (100 %) gemäss Beispiel 20 |
| 20 % | Natriumperborat |
| 5 % | Natriummetasilikat |
| 2 % | Seifenflocken |
| 1 % | Carboxymethylcellulose |
| 0,1 % | optischer Aufheller |
| 21,9 % | Natriumsulfat |

Waschmittel (3) bestehend aus

| | |
|---|---|
| 40 % | des Pfropfpolymerisates (100 %) gemäss Beispiel 20 |
| 15 % | Natriumperborat |
| 5 % | Natriummetasilikat |
| 2 % | Seifenflocken |
| 1 % | Carboxymethylcellulose |
| 0,1 % | optischer Aufheller |
| 31,7 % | Pentanatriumphosphat |
| 0,2 % | Magnesiumsilikat. |

Waschmittel (4) bestehend aus

| | |
|---|---|
| 72 % | des Pfropfpolymerisates (25 %) gemäss Beispiel 9 und |
| 28 % | des Anlagerungsproduktes von 3 Mol Ethylenoxyd an 1 Mol Oxoalkohol z. B. 2-Ethyl-hexanol. |

Beispiel 19

Gewaschen wird gemäss folgendem Waschverfahren ein mit Russ und Motorenöl künstlich angeschmutztes Mischgewebe aus Polyester und Baumwolle.

| | |
|---|---|
| Waschverfahren : | AHIBA Färbeapparat mit Drall |
| Temperaturzeit : | 30 Minuten bei 60 °C |
| pH-Wert : | mit Natriumcarbonat auf pH 10 eingestellt |
| Flottenverhältnis : | 1 : 20 |
| Wasserhärte : | 10° dH |

Nach dem Waschen wird die Ware gespült, entwässert und getrocknet. Anschliessend erfolgt die Bestimmung der Farbdifferenz nach DIN 6174. Das nicht ausgewaschene Gewebe erhält die Reflexionszahl 0. Je höher die gewonnene Zahl ist, umso besser ist die Waschwirkung.

Die Einsatzmengen und die Ergebnisse sind in folgender Tabelle veranschaulicht.

| Menge g/l | Waschmittel (-kombinationen) | Farbdifferenz Reflexionszahl nach DIN 6174 |
|---|---|---|
| 2 | 1-Benzyl-2-heptadecyl-benzimidazol-disulfon-saures Natriumsalz | 1,9 |
| 3 | Pfropfpolymerisat gemäss Beispiel 22, Nachsatz (a) | 23,9 |
| 0,5 | Pfropfpolymerisat gemäss Beispiel 22, Nachsatz (a) | 20,6 |
| 0,5 | Oligomerengemisch aus Phosphorsäureestern gemäss US-PS 4 254 063 | |
| 0,5 | Pfropfpolymerisat gemäss Beispiel 22, Nachsatz (a) | 24,4 |
| 0,7 | N-Myristyl-N,N-dimethyl-aminooxid | |

**Patentansprüche**

1. Wasserlösliches oder in Wasser dispergierbares Pfropfpolymerisat, dadurch gekennzeichnet, dass es mindestens 20 Gewichtsprozent, bezogen auf das Pfropfpolymerisat, eines hydrophilen, an ein Kohlenstoffatom gebundenen Pfropfbestandteils und mindestens einen hydrophoben Rest aufweist, welcher über eine Polyglykoletherkette von 2 bis 200 $-\overset{|}{\underset{|}{C}}-\overset{|}{\underset{|}{C}}-O$-Gruppen mit dem Pfropfbestandteil verbunden ist, wobei die Stammkette aus einem Rest eines anionischen, kationischen, amphoteren oder nichtionogenen Polyalkylenoxidadduktes, welches einen hydrophoben Substituenten enthält, besteht und an einzelne Kohlenstoffatome der Polyglykoletherkette Seitenketten von Strukturelementen aufgepfropft enthält, die aus einer ethylenisch ungesättigten polymerisierbaren Sulfonsäure oder Carbonsäure oder deren Anhydrid entstammen.

2. Pfropfpolymerisat gemäss Anspruch 1, dadurch gekennzeichnet, dass es in der Stammkette einen Rest eines nichtionogenen Polyalkylenoxidadduktes enthält, das einen hydrophoben Substituenten aufweist und dessen zweite endständige Hydroxylgruppe unsubstituiert ist.

3. Pfropfpolymerisat gemäss Anspruch 2, dadurch gekennzeichnet, dass die Stammkette aus einem Rest eines Anlagerungsproduktes von 2 bis 200 Mol Alkylenoxid an 1 Mol eines aliphatischen Monoalkohols mit mindestens 8 Kohlenstoffatomen, eines 3- bis 6-wertigen aliphatischen Alkohols, eines gegebenenfalls durch Alkyl, Benzyl oder Phenyl substituierten Phenols oder einer Fettsäure mit 8 bis 22 Kohlenstoffatomen besteht.

4. Pfropfpolymerisat gemäss Anspruch 3, dadurch gekennzeichnet, dass die Stammkette aus einem Rest eines Anlagerungsproduktes von 2 bis 40 Mol Ethylenoxid an 1 Mol Fettalkohol oder Fettsäure mit jeweils 12 bis 22 Kohlenstoffatomen oder an 1 Mol Alkylphenol mit insgesamt 4 bis 12 Kohlenstoffatomen im Alkylteil besteht.

5. Pfropfpolymerisat gemäss Anspruch 4, dadurch gekennzeichnet, dass die Stammkette aus einem Rest eines Anlagerungsproduktes von 10 Mol Ethylenoxid an 1 Mol Nonylphenol besteht.

6. Pfropfpolymerisat gemäss Anspruch 1, dadurch gekennzeichnet, dass es in der Stammkette den Rest eines sauren Esters oder dessen Salzes eines Anlagerungsproduktes von 2 bis 100 Mol Ethylenoxid an 1 Mol eines Fettalkohols mit 12 bis 22 Kohlenstoffatomen oder an 1 Mol eines Phenols, das mindestens eine Benzylgruppe, eine Phenylgruppe oder eine Alkylgruppe mit mindestens 4 Kohlenstoffatomen aufweist, enthält.

7. Pfropfpolymerisat gemäss Anspruch 6, dadurch gekennzeichnet, dass es in der Stammkette den Rest eines anionischen Polyalkylenoxidadduktes der Formel

$$Y-O-(CH_2CH_2O)_m-X \qquad (1)$$

enthält, worin Y Alkyl oder Alkenyl je mit 8 bis 22 Kohlenstoffatomen, Alkylphenyl mit 4 bis 16 Kohlenstoffatomen im Alkylteil oder o-Phenylphenyl, X den Säurerest einer anorganischen, Sauerstoff enthaltenden Säure oder den Rest einer organischen Säure und m 2 bis 40, vorzugsweise 2 bis 15 bedeuten, und das Addukt als freie Säure, Ammoniumsalz oder Alkalimetallsalz vorliegt.

8. Pfopfpolymerisat gemäss Anspruch 7, dadurch gekennzeichnet, dass es in der Stammkette den Rest eines anionischen Polyalkylenoxidadduktes der Formel

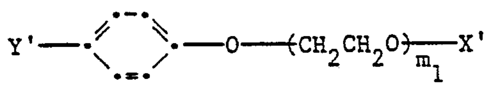
(2)

enthält, worin Y' Octyl oder Nonyl und $m_1$ 2 bis 15 bedeuten und X' sich von Schwefelsäure oder o-Phosphorsäure ableitet und das Addukt als freie Säure, Natrium- oder Ammoniumsalz vorliegt.

9. Pfropfpolymerisat gemäss Anspruch 8, dadurch gekennzeichnet, dass es in der Stammkette den Rest des sauren Phosphorsäureesters des Anlagerungsproduktes von 5 bis 12 Mol Ethylenoxid an 1 Mol p-Nonylphenol enthält.

10. Pfropfpolymerisat gemäss Anspruch 1, dadurch gekennzeichnet, dass es in der Stammkette den Rest eines kationischen Polyalkylenoxidadduktes der Formel

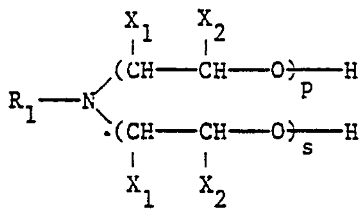
(3)

enthält, worin $R_1$ Alkyl oder Alkenyl jeweils mit 10 bis 22 Kohlenstoffatomen, von $X_1$ und $X_2$ eines Wasserstoff oder Methyl und das andere Wasserstoff und p uns s ganze Zahlen bedeuten, wobei die Summe von $p + s$ 3 bis 25 beträgt.

11. Pfropfpolymerisat gemäss Anspruch 1, dadurch gekennzeichnet, dass es in der Stammkette den Rest eines kationischen Polyalkylenoxidadduktes der Formel

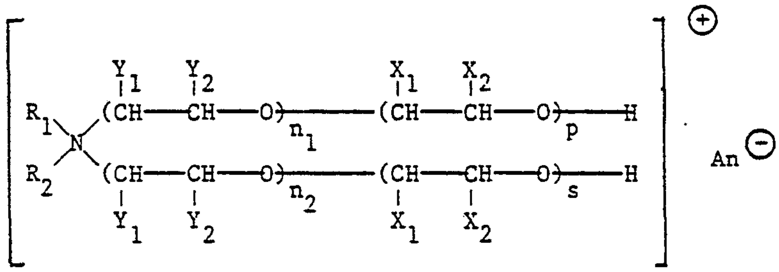
(4)

enthält, worin

$R_1$ Alkyl oder Alkenyl jeweils mit 10 bis 22 Kohlenstoffatomen

$R_2$ Alkyl mit 1 bis 4 Kohlenstoffatomen, Hydroxyalkyl mit 2 bis 4 Kohlenstoffatomen, Carbamoylmethyl oder Benzyl,

von $Y_1$ und $Y_2$ eines Wasserstoff und das andere Phenyl,

von $X_1$ und $X_2$ eines Wasserstoff oder Methyl und das andere Wasserstoff,

An $^{\ominus}$ das Anion einer anorganischen oder organischen Säure, insbesondere einer starken Mineralsäure oder einer organischen Sulsulfonsäure,

$n_1$ und $n_2$ 0 oder 1 und

p und s ganze Zahlen bedeuten, wobei die Summe von $p + s$ 3 bis 25 beträgt.

12. Pfropfpolymerisat gemäss einem der Ansprüche 1 bis 3, dadurch gekennzeichnet, dass es in der Stammkette den Rest eines Monoschwefelsäureesters von Anlagerungsprodukten von 3 bis 15 Mol Ethylenoxid an 1 Mol Fettamin mit 12 bis 22 Kohlenstoffatomen enthält.

13. Pfropfpolymerisat gemäss einem der Ansprüche 1 bis 12, dadurch gekennzeichnet, dass es in den Seitenketten als aufgepfropfte Monomeren Monocarbonsäuren mit 3 bis 5 Kohlenstoffatomen und vorzugsweise aufgepfropfte Methacrylsäure oder Acrylsaüre enthält.

14. Pfropfpolymerisat gemäss Anspruch 13, dadurch gekennzeichnet, dass es in den Seitenketten Acrylsäure aufgepfropft enthält.

15. Pfropfpolymerisat gemäss einem der Ansprüche 1 bis 14, dadurch gekennzeichnet, dass es in der Stammkette 5 bis 80 Gewichtsprozent eines anionischen, kationischen, amphoteren oder nichtionogenen Polyalkylenoxidadduktes und 95 bis 20 Gewichtsprozent der in den Seitenketten aufgepfropften Monomeren enthält.

16. Pfropfpolymerisat gemäss Anspruch 15, dadurch gekennzeichnet, dass es in der Stammkette 5 bis 50 Gewichtsprozent des Polyalkylenoxidadduktes und in den Seitenketten 95 bis 50 Gewichtsprozent der in den Seitenketten aufgepfropften Monomeren enthält.

17. Pfropfpolymerisat gemäss einem der Ansprüche 1 bis 3, dadurch gekennzeichnet, dass es in der Stammkette den Rest eines Anlagerungsproduktes von 2 bis 40 Mol Ethylenoxid an 1 Mol Fettalkohol mit 12 bis 22 Kohlenstoffatomen oder an 1 Mol eines Alkylphenols mit insgesamt 4 bis 12 Kohlenstoffatomen im Alkylteil oder von 3 bis 40 Mol Ethylenoxid an 1 Mol eines Fettamins mit 10 bis 22 Kohlenstoffatomen und in den Seitenketten mindestens 30 Gew.-%, bezogen auf das Pfropfpolymerisat, aufgepfropfte Acrylsäure enthält.

18. Pfropfpolymerisat gemäss Anspruch 17, dadurch gekennzeichnet, dass es als Stammkette den Rest des Anlagerungsproduktes von 2 bis 35 Mol Ethylenoxid an 1 Mol Octylphenol oder Nonylphenol enthält.

19. Wässerige Lösungen oder Emulsionen, dadurch gekennzeichnet, dass sie ein Pfropfpolymerisat gemäss einem der Ansprüche 1 bis 18 enthalten.

20. Verfahren zur Herstellung von wasserlöslichen oder in Wasser dispergierbaren Pfropfpolymerisaten, dadurch gekennzeichnet, dass man

(1) ein anionisches, kationisches, amphoteres oder nichtionogenes Polyalkylenoxidaddukt, welches einen hydrophoben Rest und eine Polyglykoletherkette von 2 bis 200 —C—C—O-Gruppen aufweist mit

(2) mindestens 20 Gew.-%, bezogen auf das Pfropfpolymerisat, eines ethylenisch ungesättigten polymerisierbaren Monomeren, welches hydrophile Gruppen enthält,

zusammenbringt und in Gegenwart von Katalysatoren polymerisiert.

21. Verfahren gemäss Anspruch 20, dadurch gekennzeichnet, dass man als Katalysatoren freie Radikale bildende organische oder anorganische Initiatoren, vorzugsweise Dibenzoylperoxid, verwendet.

22. Verwendung der Pfropfpolymerisate gemäss einem der Ansprüche 1 bis 19 als Antischaummittel, Antistatika, Builder, Emulgatoren, Foulardierhilfsmittel, Netzmittel, Papierentlüfter, Schlammentwässerungshilfsmittel, Textilhilfsmittel, Vergrauungsinhibitoren oder Waschmittel.

**Claims**

1. A water-soluble or water-dispersible graft polymer comprising at least 20 % by weight, based on said graft polymer, of a hydrophilic graft component linked to a carbon atom and at least one hydrophobic radical linked to said graft component through a polyglycol ether chain containing 2 to 200 —C—C—O— groups, the main chain consisting of a radical of an anionic, cationic, amphoteric or non-ionic polyalkylene oxide adduct which carries a hydrophobic substituent and contains, at individual carbon atoms of the polyglycol ether chain, grafted structural units in the form of side chains which are derived from an ethylenically unsaturated polymerisable sulfonic acid or carboxylic acid or the anhydride thereof.

2. A graft polymer according to claim 1, wherein the main chain consists of a radical of a non-ionic polyalkylene oxide adduct which carries a hydrophobic substituent, the second terminal hydroxyl group of which adduct is unsubstituted.

3. A graft polymer according to claim 2, wherein the main chain consists of a radical of an adduct of 2 to 200 moles of an alkylene oxide with 1 mole of an aliphatic monoalcohol containing not less than 8 carbon atoms, of a trihydric to hexahydric aliphatic alcohol, of a phenol which is unsubstituted or substituted by alkyl, benzyl or phenyl, or of a fatty acid containing 8 to 22 carbon atoms.

4. A graft polymer according to claim 3, wherein the main chain consists of a radical of an adduct of 2 to 40 moles of ethylene oxide with 1 mole of a fatty alcohol or fatty acid, each containing 12 to 22 carbon atoms or with 1 mole of an alkylphenol containing a total of 4 to 12 carbon atoms in the alkyl moiety.

5. A graft polymer according to claim 4, wherein the main chain consists of a radical of an adduct of 10 moles of ethylene oxide and 1 mole of nonyl phenol.

6. A graft polymer according to claim 4, wherein the main chain consists of the radical of an acid ester or salt thereof, of an adduct of 2 to 100 moles of ethylene oxide with 1 mole of a fatty alcohol containing 12 to 22 carbon atoms or with 1 mole of a phenol containing at least one benzyl group, one phenyl group or one alkyl group of not less than 4 carbon atoms.

7. A graft polymer according to claim 6, wherein the main chain consists of the radical of an anionic polyalkylene oxide adduct of the formula

$$Y{-}O{-}(CH_2{-}CH_2O)_m{-}X \qquad (1)$$

wherein Y is alkyl or alkenyl, each of 8 to 22 carbon atoms, alkylphenyl containing 4 to 16 carbon atoms in the alkyl moiety or o-phenylphenyl, X is the acid radical of an inorganic oxygen-containing acid or the radical of an organic acid and m is 2 to 40, preferably 2 to 15, said adduct being in the form of the free acid, ammonium salt or alkali metal salt.

8. A graft polymer according to claim 7, wherein the main chain consists of the radical of an anionic polyalkylene oxide adduct of the formula

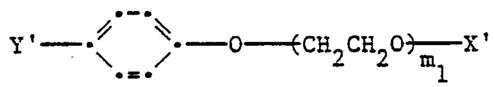

(2)

wherein Y' is octyl or nonyl, $m_1$ is 2 to 15 and X' is derived from sulfuric acid or o-phosphoric acid, said adduct being in the form of the free acid or the sodium or ammonium salt.

9. A graft polymer according to claim 8, wherein the main chain consists of the radical of the acid phosphoric acid ester of the adduct of 5 to 12 moles of ethylene oxide and 1 mole of p-nonyl phenol.

10. A graft polymer according to claim 1, wherein the main chain consists of the radical of a cationic polyalkylene oxide adduct of the formula

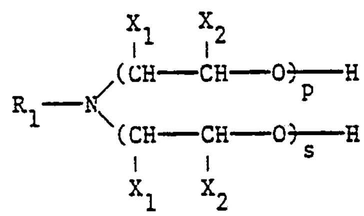

(3)

wherein $R_1$ is alkyl or alkenyl, each of 10 to 22 carbon atoms, one of $X_1$ and $X_2$ is hydrogen or methyl and the other is hydrogen and p and s are integers, the sum of $p + s$ being 3 to 25.

11. A graft polymer according to claim 1, wherein the main chain consists of the radical of a cationic polyalkylene oxide adduct of the formula

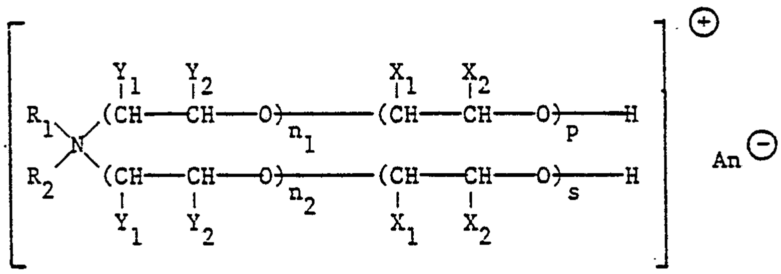

(4)

wherein $R_1$ is alkyl or alkenyl, each of 10 to 22 carbon atoms atoms, $R_2$ is alkyl of 1 to 4 carbon atoms, hydroxyalkyl of 2 to 4 carbon atoms, carbamoylmethyl or benzyl, one of $Y_1$ and $Y_2$ is hydrogen and the other is phenyl, one of $X_1$ and $X_2$ is hydrogen or methyl and the other is hydrogen, $An^{\ominus}$ is the anion of an inorganic or organic acid, in particular a strong mineral acid or an organic sulfonic acid, $n_1$ and $n_2$ are 0 or 1 and p and s are integers, the sum of $p + s$ being 3 to 25.

12. A graft polymer according to any one of claims 1 to 3, wherein the main chain consists of the radical of a monosulfated adduct of 3 to 15 moles of ethylene oxide with 1 mole of a fatty amine containing 12 to 22 carbon atoms.

13. A graft polymer according to any one of claims 1 to 12, which contains a monocarboxylic acid of 3 to 5 carbon atoms, preferably methacrylic acid or acrylic acid, as graft monomer in the form of side chains.

14. A graft polymer according to claim 13, which contains grafted acrylic acid in the form of side chains.

15. A graft polymer according to any one of claims 1 to 14, which contains 5 to 80 % by weight of an anionic, cationic, amphoteric or non-ionic polyalkylene oxide adduct as main chain and 95 to 20 % by weight of the graft monomer as side chains.

16. A graft polymer according to claim 15, which contains 5 to 50 % by weight of the polyalkylene oxide adduct as main chain and 95 to 50 % by weight of the graft monomer as side chains.

17. A graft polymer according to any one of claims 1 to 3, wherein the main chain consists of the radical of an adduct of 2 to 40 moles of ethylene oxide with 1 mole of a fatty alcohol containing 12 to 22 carbon atoms or with 1 mole of an alkylphenol containing a total of 4 to 12 carbon atoms in the alkyl moiety, and which contains at least 30 % by weight, based on the graft polymer, of grafted acrylic acid as side chains.

18. A graft polymer according to claim 17, wherein the main chain consists of the radical of the adduct of 2 to 35 moles of ethylene oxide with 1 mole of octylphenol or nolnylphenol.

19. An aqueous solution or emulsion, which comprises a graft polymer according to any one of claims 1 to 18.

20. A process for the preparation of a water-soluble or water-dispersible graft polymer, which comprises bringing together (1) an anionic, cationic, amphoteric or non-ionic polyalkylene oxide adduct containing a hydrophobic radical and a polyglycol ether chain of 2 to 200 $-\overset{|}{\underset{|}{C}}-\overset{|}{\underset{|}{C}}-O-$ groups and (2) at least 20 % by weight, based on the graft polymer, of an ethylenically unsaturated polymerisable monomer containing hydrophilic groups, and carrying out the polymerisation in the presence of a catalyst.

21. A process according to claim 20, wherein an organic or inorganic initiator which forms free radicals, preferably dibenzoyl peroxide, is used as catalyst.

22. Use of a graft polymer as claimed in any one of claims 1 to 19 as antifoam, antistatic agent, builder, emulsifier, padding auxiliary, wetting agent, paper deaerator, sludge dewatering auxiliary, textile auxiliary, anti-redeposition agent or detergent.

**Revendications**

1. Polymère greffé, soluble dans l'eau ou dispersible dans l'eau, caractérisé en ce qu'il contient au moins 20 % en poids, sur la base du polymère greffé, d'un constituant greffon, hydrophile, fixé à un atome de carbone, et au moins un radical hydrophobe relié au constituant greffon par l'intermédiaire d'une chaîne polyoxyéthylène comportant 2 à 200 groupes $-\overset{|}{\underset{|}{C}}-\overset{|}{\underset{|}{C}}-O-$, la chaîne principale étant constituée d'un reste d'un produit d'addition polyoxyalkylène anionique, cationique, amphotère ou non ionique, contenant un substituant hydrophobe, et contenant, greffées sur des atomes de carbone individuels de la chaîne polyoxyéthylène, des chaînes latérales d'éléments structuraux qui dérivent d'un acide sulfonique, ou d'un acide carboxylique, ou de son anhydride, à insaturation éthylénique et polymérisable.

2. Polymère greffé selon la revendication 1, caractérisé en ce qu'il contient dans sa chaîne principale un reste d'un produit d'addition polyoxyalkylène non ionique, qui possède un substituant hydrophobe et dont deux groupes hydroxyle terminaux sont non substitués.

3. Polymère greffé selon la revendication 2, caractérisé en ce que la chaîne principale est constituée d'un reste d'un produit d'addition de 2 à 200 moles d'oxyde d'alkylène sur 1 mole d'un monoalcool aliphatique ayant au moins 8 atomes de carbone, d'un tri- à hexa-alcool aliphatique, d'un phénol éventuellement substitué par un groupe alkyle, benzyle ou phényle, ou d'un acide gras ayant 8 à 22 atomes de carbone.

4. Polymère greffé selon la revendication 3, caractérisé en ce que la chaîne principale est constituée d'un reste d'un produit d'addition de 2 à 40 moles d'oxyde d'éthylène sur 1 mole d'un alcool gras ou d'un acide gras ayant chacun 12 à 22 atomes de carbone, ou sur 1 mole d'un alkylphénol ayant en tout 4 à 12 atomes de carbone dans la partie alkyle.

5. Polymère greffé selon la revendication 4, caractérisé en ce que la chaîne principale est constituée d'un reste d'un produit d'addition de 10 moles d'oxyde d'éthylène sur 1 mole de nonylphénol.

6. Polymère greffé selon la revendication 1, caractérisé en ce qu'il contient dans sa chaîne principale le reste d'un ester acide, ou de son sel, d'un produit d'addition de 2 à 100 moles d'oxyde d'éthylène sur 1 mole d'un alcool gras ayant 12 à 22 atomes de carbone, ou sur 1 mole d'un phénol comprenant au moins un groupe benzyle, un groupe phényle ou un groupe alkyle ayant au moins 4 atomes de carbone.

7. Polymère greffé selon la revendication 6, caractérisé en ce qu'il contient dans sa chaîne principale le reste d'un produit d'addition polyoxyalkylène anionique de formule

$$Y-O-(CH_2CH_2O)_m-X \qquad (1)$$

dans laquelle Y est un radical alkyle ou alcényle, chacun ayant 8 à 22 atomes de carbone, alkylphényle chacun ayant 8 à 22 atomes de carbone, alkylphényle ayant 4 à 16 atomes de carbone dans la partie alkyle, ou o-phénylphényle, X est le radical acide d'un acide inorganique contenant de l'oxygène, ou le radical d'un acide organique, et m vaut de 2 à 40, de préférence 2 à 15, le produit d'addition étant présent sous la forme d'un acide libre, d'un sel d'ammonium ou d'un sel d'un métal alcalin.

8. Polymère greffé selon la revendication 7, caractérisé en ce qu'il contient dans sa chaîne principale le reste d'un produit d'addition polyoxyalkylène anionique de formule

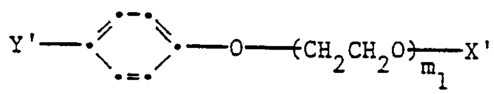
(2)

dans laquelle Y' est le radical octyle ou nonyle, $m_1$ vaut de 2 à 15, et X' dérive de l'acide sulfurique ou de l'acide o-phosphorique, le produit d'addition se présentant sous la forme d'un acide libre ou d'un sel d'ammonium ou de sodium.

9. Polymère greffé selon la revendication 8, caractérisé en ce qu'il contient dans sa chaîne principale le reste d'un phosphate acide du produit d'addition de 5 à 12 moles d'oxyde d'éthylène sur 1 mole de p-nonylphénol.

10. Polymère greffé selon la revendication 1, caractérisé en ce qu'il contient dans sa chaîne principale le reste d'un produit d'addition polyoxyalkylène cationique de formule

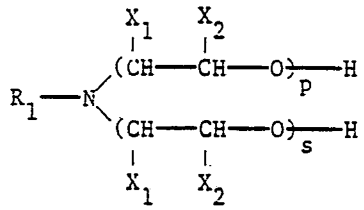
(3)

dans laquelle $R_1$ est un radical alkyle ou alcényle, ayant chacun 10 à 22 atomes de carbone, l'un des radicaux $X_1$ et $X_2$ est l'hydrogène ou le radical méthyle, et l'autre est l'hydrogène, et p et s sont des nombres entiers, la somme p + s valant 3 à 25.

11. Polymère greffé selon la revendication 1, caractérisé en ce qu'il contient dans la chaîne principale le reste d'un produit d'addition polyoxyalkylène cationique de formule

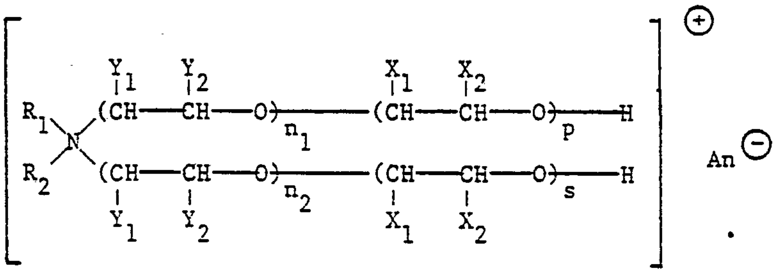
(4)

dans laquelle

$R_1$ est un radical alkyle ou alcényle ayant chacun de 10 à 22 atomes de carbone,

$R_2$ est un radical alkyle ayant 1 à 4 atomes de carbone, hydroxyalkyle ayant 2 à 4 atomes de carbone, carbamoylméthyle ou benzyle,

l'un des deux radicaux $Y_1$ et $Y_2$ est l'hydrogène, et l'autre est le radical phényle,

l'un des radicaux $X_1$ et $X_2$ est l'hydrogène ou le radical méthyle, et l'autre est l'hydrogène,

$An^{\ominus}$ est l'anion d'un acide organique ou inorganique, en particulier d'un acide minéral fort ou d'un acide sulfonique organique,

$n_1$ et $n_2$ valent 0 ou 1, et

p et s sont des nombres entiers, la some p + s valant 3 à 25.

12. Polymère greffé selon l'une des revendications 1 à 3, caractérisé en ce qu'il contient dans la chaîne principale le reste d'un monosulfate de produits d'addition de 3 à 15 moles d'oxyde d'éthylène sur 1 mole d'une amine grasse ayant 12 à 22 atomes de carbone.

13. Polymère greffé selon l'une des revendications 1 à 12, caractérisé en ce qu'il contient dans les chaînes latérales, à titre de monomères greffés, des acides monocarboxyliques ayant 3 à 5 atomes de carbone, et de préférence de l'acide méthacrylique ou de l'acide acrylique greffés.

14. Polymère greffé selon la revendication 13, caractérisé en ce qu'il contient dans les chaînes latérales de l'acide acrylique greffé.

15. Polymère greffé selon l'une des revendications 1 à 14, caractérisé en ce qu'il contient dans la chaîne principale 5 à 80 % en poids d'un produit d'addition polyoxyalkylène anionique, cationique, amphotère ou non ionique, et 95 à 20 % en poids de monomères greffés sur les chaînes latérales.

16. Polymère greffé selon la revendication 15, caractérisé en ce qu'il contient dans la chaîne principale 5 à 50 % en poids du produit d'addition polyoxyalkylène et, dans les chaînes latérales, 95 à 50 % en poids de monomères greffés sur les chaînes latérales.

17. Polymère greffé selon l'une des revendications 1 à 3, caractérisé en ce qu'il contient dans la chaîne principale le reste d'un produit d'addition de 2 à 40 moles d'oxyde d'éthylène sur 1 mole d'un alcool gras ayant 12 à 22 atomes de carbone, ou sur 1 mole d'un alkylphénol ayant en tout 4 à 12 atomes de carbone dans la partie alkyle, ou bien de 3 à 40 moles d'oxyde d'éthylène sur 1 mole d'une amine grasse ayant 10 à 22 atomes de carbone, et, dans les chaînes latérales, au moins 30 % en poids, sur la base du polymère greffé, d'acide acrylique greffé.

18. Polymère greffé selon la revendication 17, caractérisé en ce qu'il contient en tant que chaîne principale le reste d'un produit de fixation de 2 à 35 moles d'oxyde d'éthylène sur 1 mole d'octylphénol ou de nonylphénol.

19. Solutions ou émulsions aqueuses, caractérisées en ce qu'elles contiennent un polymère greffé selon l'une des revendications 1 à 18.

20. Procédé pour la préparation de polymères greffés solubles dans l'eau ou dispersibles dans l'eau, caractérisé en ce qu'on met en présence.

(1) un produit d'addition polyoxyalkylène anionique, cationique, amphotère ou non ionique, qui présente un radical hydrophobe et une chaîne polyoxyéthylène de 2 à 200 groupes 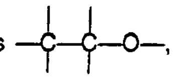, et

(2) au moins 20 % en poids, sur la base du polymère greffé, d'un monomère polymérisable à insaturation éthylénique, contenant des groupes hydrophiles,

et qu'on les polymérise en présence de catalyseurs.

21. Procédé selon la revendication 20, caractérisé en ce qu'on utilise en tant que catalyseurs des initiateurs organiques ou inorganiques, formant des radicaux libres, de préférence du peroxyde de benzoyle.

22. Utilisation des polymères greffés selon l'une des revendications 1 à 19 en tant qu'agents antimousses, antistatiques, adjuvants, agents émulsionnants, auxiliaires de foulardage, mouillants, agents de dégazage du papier, auxiliaires de déshydratation des boues, auxiliaires textiles, inhibiteurs de grisaillement ou détergents.